# EUROPEAN PATENT SPECIFICATION

(11) **EP 1 460 107 B1**
(45) Date of publication and mention of the grant of the patent: **11.03.2009**
(21) Application number: 02806063.0
(22) Date of filing: 18.12.2002
(51) Int. Cl.: C08L 67/04, C08K 3/22, C08K 5/521, C08J 5/00, C08K 5/00

(54) **POLYLACTIC ACID-BASED RESIN COMPOSITIONS, MOLDED ARTICLES AND PROCESS FOR PRODUCING THE SAME**
AUF POLYMILCHSÄURE BASIERENDE HARZZUSAMMENSETZUNGEN; FORMKÖRPER UND VERFAHREN ZU IHRER HERSTELLUNG
COMPOSITIONS DE RESINE A BASE D'ACIDE, ARTICLES MOULES ET PROCEDE DE PRODUCTION DE CEUX-CI

(30) Priority: 28.12.2001 JP 2001400252; 28.12.2001 JP 2001400253
(43) Date of publication of application: 22.09.2004
(73) Proprietor: Adeka Corporation, Arakawa-ku Tokyo (JP); Toyota Jidosha Kabushiki Kaisha, Toyota-shi, Aichi 471-8571 (JP)
(72) Inventor: Nakazawa, Kenji, Saitama-shi, Saitama 336-0022 (JP); Tobita, Etsuo, Saitama-shi, Saitama 336-0022 (JP); Yukino, Toshinori, Saitama-shi, Saitama 336-0022 (JP); Urayama, Hiroshi, Toyota-shi, Aichi 471-8571 (JP); Kanamori, Takeshi, Toyota-shi, Aichi 471-8571 (JP); Okuyama, Hisashi, Toyota-shi, Aichi 471-8571 (JP)
(74) Representative: Kuhnen & Wacker
(86) International application number: PCT/JP2002/013265
(87) International publication number: WO 2003/057781

(56) References cited:
- EP-A- 0 400 855
- JP-A- 10 087 879

## Description

### TECHNICAL FIELD

The present invention relates to a polylactic acid-based resin composition from which articles with a high tensile strength, high impact strength and high heat resistance can be molded with improved moldability, as well as to heat-resistant molded articles obtained from such a resin composition. The present invention also relates to a process for producing the heat-resistant molded articles of the polylactic acid-based resin.

The present invention further relates to a polylactic acid-based stereocomplex polymer resin composition from which articles with a high heat resistance and a high impact resistance can be molded with improved moldability, as well as to heat-resistant molded articles obtained from such a resin composition. The present invention also relates to a process for producing the heat-resistant molded articles of the polylactic acid-based resin.

### BACKGROUND ART

The growing concern for environmental protection has led to an increased demand for biodegradable polymers and molded articles thereof that can decompose when left in natural environment, and significant effort has been devoted to the study of aliphatic polyesters and other biodegradable resins. Among others, polylactic acid-based polymers, which have a sufficiently high melting point of 140 to 180°C and have an excellent transparency, are expected to find wide application in packaging materials and other molded articles that can take advantage of the material's high transparency.

Despite its high rigidity, a container of a polylactic acid-based polymer formed by injection-molding and the likeare susceptible to heat, or in some cases, to both heat and impact, and packaging containers, for example, are therefore not able to use with hot water or microwave oven. Thus, application of this material has been limited.

In order to impart sufficient heat resistance to such molded articles, the molds need to be cooled over a sufficiently long period of time during the molding process, or following the molding, the molded articles must be annealed to make them highly crystallized. However, such a long cooling process is impractical and often results in insufficient crystallization and is thus disadvantageous, as is the post-crystallization by annealing, in which molded articles tend to deform as they undergo crystallization.

As a method for increasing the rate of crystallization, for example, Japanese Patent Laid-Open Publication No. Sho 60-86156 is described that, fine powder of all-aromatic polyester that is composed mainly of terephthalic acid and resorcin is added to serve as a nucleating agent for promoting crystallization of polyethylene terephthalate (PET). Such approaches to facilitate the crystallization by the addition of nucleating agents are well-known.

Also, examples of techniques in which the aforementioned additives are added to biodegradable polymers are disclosed in Japanese Patent Laid-Open Publication No. Hei 5-70696, Japanese Patent National Publication No. Hei 4-504731 (WO 90/01521), United States Patent No. 5,180,765, Japanese Patent National Publication No. Hei 6-504799 (WO 92/04413), Japanese Patent Laid-Open Publication No. Hei 4-220456, and Japanese Patent Laid-Open Publication No. 2001-226571.

In one such technique disclosed in Japanese Patent Laid-Open Publication No. Hei 5-70696, 10 to 40% by weight of calcium carbonate or hydrous magnesium silicate (talc) with an average particle size of 20µm or less is added to a biodegradable plastic, such as poly-3-hydroxybutylate/poly-3-hydroxyvalerate copolymer, polycaprolactone and polylactic acid, as a material for plastic containers. In this technique, however, the inorganic filler comprised in large amounts are intended to facilitate degradation of wasted biodegradable plastics but not to promote the crystallization of the polymer to thereby increase its heat resistance.

In another technique described in Japanese Patent National Publication No. Hei 4-504731 (WO 90/01521), an inorganic filler such as silica or kaolinite is added to a lactide thermoplastic to alter properties of hardness, strength and temperature resistance of the plastic. In one example, 5wt% of calcium lactate to serve as a nucleating agent was blended for 5 minutes using a heat roll at 170°C, with a L/DL-lactide polymer. The sheet so formed proved to have sufficient rigidity and strength, opacity, as well as increased degree of crystallization.

Japanese Patent National Publication No. Hei 6-504799 (WO 92/04413) describes a lactate and a benzoate to serve as a nucleating agent. In one example, 1% calcium lactate was added to a polylactide copolymer, and injection-molding is performed using a mold maintained at about 85°C with a detention time of 2 minutes. However, because of incompleteness of crystallization, the product was further annealed in the mold at about 110 to 135°C. Also, Japanese Patent Laid-Open Publication No. Hei 8-193165 is disclosed in the paragraph numbered [0009] that, injection-molding was actually tried using a typical nucleating agent, such as talc, silica, calcium lactate or sodium benzoate, had been added to a polylactic acid-based polymer. However, this technique failed to provide molded articles resistant to practical use since the crystallization rate was unfavorably slow and the resulting molded articles were brittle. The description further states that such polylactic acid-based polymers, when used in combination with typical talc, silica or the like and subjected to general injection molding, blow molding, or compression-molding technique, underwent crystallization at a significantly slow rate. In addition, the resulting molded articles did not possess a practical heat resistance, allowing the articles to be used only at temperatures not exceeding 100°C, nor did they exhibit a sufficient impact resistance. As a result, application of these materials was limited.

In still another technique described in Japanese Patent Laid-Open Publication No. Hei 4-220456, a polyglycolic acid and/or its derivative to serve as a nucleating agent is added to poly-L-lactide to increase the crystallization rate. According to this technique, the cycle time of injection molding can be reduced and polymers with improved mechanical properties can be obtained. In one exemplary injection molding process, the degree of crystallization was 22.6% with the cooling time of 60 seconds and with no nucleating agent added, whereas the degree of crystallization was 45.5% with a nucleating agent added. According to the description in the paragraph numbered [0010] of Japanese Patent Laid-Open Publication No. Hei 8-193165, however, molding was unsuccessful when a polylactic acid-based polymer was actually injection-molded without any nucleating agents, under the condition of the mold temperature above the glass transition temperature as described in Japanese Patent Laid-Open Publication No. Hei 4-220456.

In yet another technique described in Japanese Patent Laid-Open Publication No. 2001-226571, a sorbitol compound or a metal phosphate to serve as a nucleating agent was added to a polylactic acid-based polymer to form heat-shrinkable film, in which a heat-shrinking property was improved. The nucleating agent described in this publication was provided in the form of a single compound, rather than a combined system, and nothing was mentioned concerning stereo polymers.

### DISCLOSURE OF THE INVENTION

### Object of the Invention

In view of the aforementioned drawbacks of prior art, it is an objective of the present invention to provide a polylactic acid-based resin composition that makes it possible to make molded articles having a high tensile strength, high impact strength and high heat resistance with improved moldability. It is also an objective of the present invention to provide molded articles that are formed of the polylactic acid-based resin composition and thus have a high heat resistance as well as high tensile strength and high impact strength. It is a further objective of the present invention
The disclosure of EP-A-0 400 855 is directed to a 3-hydroxybutyrate polymer composition. It discloses the chemical formula of a hydroxyalkanoate (HA) polymer. This document does not disclose polylactic acid, neither specifically, nor illustratively. Further, said document does also not disclose a hydrotalcite compound.
Moreover, it fails to disclose a metal phosphate. Instead this document discloses an organophosphonic or organophosphinic acid or ester thereof or a derivative of said acid or ester distinct from the phosphate of the present invention.
JP-10-87879, is directed to a glass fibre reinforced crystalline resin composition comprising a crystalline resin and glass fibre. Hydrotalcite is exemplified as additive and crystalline resins are also exemplified in in this document.
JP-10-87879 discloses thermoplastic linear polyesters such as polyethylene terephtalate, polybutylene terephtalate, polyhexamethylene terephtalate; and polycaprolactone but not disclose polylactic acid.
EP-A-1 209 190, is directed to a nucleating agent as employed in the present invention. However, this document is absolutely silent with regard to polylactic acid or a polylactic acid-based resin compositions.
to provide a process for manufacturing molded articles of the polylactic acid-based resin that have a high heat resistance as well as high tensile strength, and high impact strength, from the polylactic acid-based resin compositions.

It is another objective of the present invention to provide a polylactic acid-based stereocomplex polymer resin composition that makes it possible to make molded articles with a high heat resistance and high impact resistance with improved moldability. It is still another objective of the present invention to provide molded articles that are formed of the polylactic acid-based resin composition and thus have a high heat resistance and a high impact resistance. It is still yet another objective of the present invention to provide a process for manufacturing molded articles of the Polylactic acid-based resin that have a high heat resistance and a high impact resistance from the polylactic acid-based resin compositions.

### Summary of the Invention

Over the course of studies, the present inventors have found that the above-described objectives of the present invention can be achieved through the use of a metal salt of an aromatic organic phosphate and a hydrotalcite compound and, optionally, of at least one of a dibenzylidene sorbitol compound and a metal salt of an aliphatic carboxylic acid, and, further optionally, of talc. Each of these component serves as a nucleating agent for crystallization. This finding ultimately led the present inventors to devise the present invention.

Over the course of studies, the present inventors have also found that the above-described objectives of the present invention can be achieved by adding a metal phosphate and, further favorably, hydrous magnesium silicate (talc), each serving as a nucleating agent, to a polymer capable of forming a stereocomplex composed mainly of polylactic acid. This finding ultimately led the present inventors to devise the present invention.

### First aspect of the present invention:

The present invention is a polylactic acid-based resin composition comprising 0.01 to 5.0 parts by weight of a metal phosphate and 0.01 to 5.0 parts by weight of a hydrotalcite each serving as a nucleating agent, with respect to 100 parts by weight of a polylactic acid-based polymer.

The present invention is the above-described polylactic acid-based resin composition wherein the metal phosphate comprises at least one metal salt of an aromatic organic phosphate represented either by the following general formula (1): 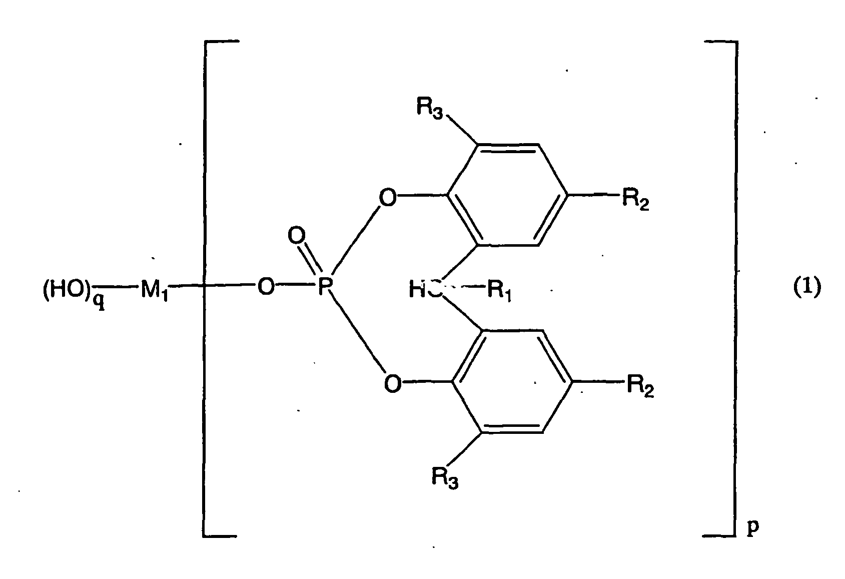 wherein R₁ represents a hydrogen atom or an alkyl group having 1 to 4 carbon atoms; R₂ and R₃ each independently represent a hydrogen atom or an alkyl group having 1 to 12 carbon atoms and may or may not be identical to each other; M₁ represents an alkali metal atom, an alkaline earth metal atom, a zinc atom, or an aluminum atom; p is an integer of 1 or 2; and q is an integer of 0 when M₁ is an alkali metal atom, an alkaline earth metal atom, or a zinc atom while q is an integer of 1 or 2 when M₁ is an aluminum atom, or by the following general formula (2): 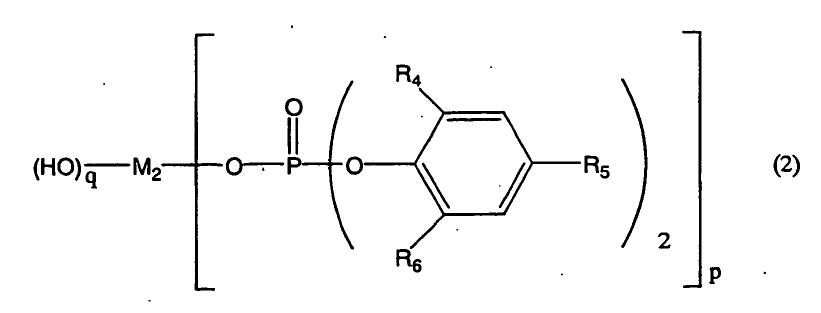 wherein R₄, R₅, and R₆ each independently represent a hydrogen atom or an alkyl group having 1 to 12 carbon atoms and may or may not be identical to each other; M₂ represents an alkali metal atom, an alkaline earth metal atom, a zinc atom, or an aluminum atom; p is an integer of 1 or 2; and q is an integer of 0 when M₂ is an alkali metal atom, an alkaline earth metal atom, or a zinc atom while q is an integer of 1 or 2 when M₂ is an aluminum atom.

The present invention is the above-described polylactic acid-based resin composition further comprising as the nucleating agent at least one selected from the group consisting of a dibenzylidene sorbitol compound represented by the following general formula (3) and a metal salt of an aliphatic carboxylic acid: 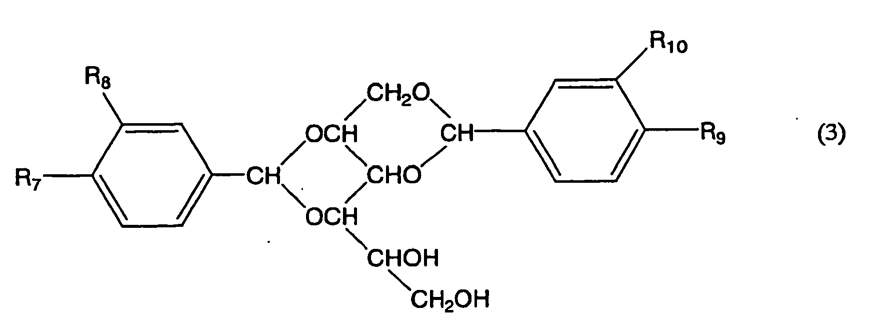 wherein R₇ and R₈ each independently represent a hydrogen atom or an alkyl group having 1 to 4 carbon atoms and may or may not be identical to each other, provided that at least one of R₇ and R₈ is an alkyl group having 1 to 4 carbon atoms; and R₉ and R₁₀ each independently represent a hydrogen atom or an alkyl group having 1 to 4 carbon atoms and may or may not be identical to each other, provided that at least one of R₉ and R₁₀ is an alkyl having group 1 to 4 carbon atoms.

The present invention is the above-described polylactic acid-based resin composition, wherein the basic inorganic aluminum compound is at least one selected from the group consisting of aluminum hydroxide, aluminum oxide, aluminum carbonate, and hydrotalcite compound. The present invention is the above-described polylactic acid-based resin composition, wherein the hydrotalcite compound is represented by the following general formula (4):

LiₐZn_{b}Mg_{c}Al_{d}(OH)_{a+2b+2c+3d-2}CO₃·nH₂O (4)

wherein a is a number from 0 to 5.0; b is a number from 0 to 3.0; c is a number from 0.1 to 6.0; d is a number from 1.0 to 8.0; and n is a number from 0 to 30. The present invention is the above-described polylactic acid-based resin compositions, wherein the hydrotalcite compound is a lithium-containing hydrotalcite compound with the amount a in the general formula (4) being in the range from 0.1 to 5.

The present invention is the above-described polylactic acid-based resin composition, further comprising hydrous magnesium silicate (talc). The present invention is the above-described polylactic acid-based resin composition, wherein the hydrous magnesium silicate (talc) has an average particle size of 10µm or less.

The present invention is a heat-resistant molded article of polylactic acid-based resin obtained by molding any of the aforementioned polylactic acid-based resin compositions.

The present invention is a method for producing a heat-resistant molded article of polylactic acid-based resin, involving the steps of:
melting any of the above-described polylactic acid-based resin composition,
filling a mold of a molding machine set in a temperature range of not more than the crystallization-initiating point nor less than the glass transition point, as measured by a differential scanning calorimeter (DSC), with the composition, and
molding the composition under crystallizing.

The present invention is the above-described method for producing a heat-resistant molded article of polylactic acid-based resin, wherein the temperature of the mold is set in a temperature range of not more than the crystallization-initiating point nor less than the crystallization-terminating point, as measured by a differential scanning calorimeter (DSC).

### Second aspect of the present invention:

Also, the present invention is a polylactic acid-based resin composition comprising 100 parts by weight of a polylactic acid-based polymer and 0.01 to 10.0 parts by weight of a nucleating agent, and having a crystallization peak temperature measured by a differential scanning calorimeter (DSC) within the range of 90 to 120°C and a heat of crystallization of 20J/g or more.

The present invention is the above-described polylactic acid-based resin composition comprising as the nucleating agent at least one selected from the group consisting of a metal phosphate and a hydrotalcite.

The present invention is the above-described polylactic acid-based resin composition wherein the metal phosphate comprises at least one metal salt of an aromatic organic phosphate represented either by the following general formula (1): 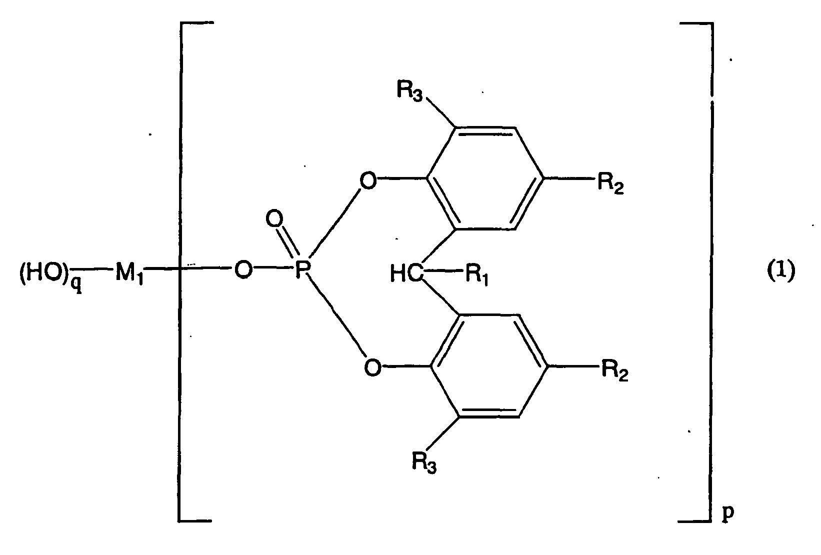 wherein R₁ represents a hydrogen atom or an alkyl group having 1 to 4 carbon atoms; R₂ and R₃ each independently represent a hydrogen atom or an alkyl group having 1 to 12 carbon atoms and may or may not be identical to each other; M₁ represents an alkali metal atom, an alkaline earth metal atom, a zinc atom, or an aluminum atom; p is an integer of 1 or 2; and q is an integer of 0 when M₁ is an alkali metal atom, an alkaline earth metal atom or a zinc atom while q is an integer of 1 or 2 when M₁ is an aluminum atom, or by the following general formula (2): 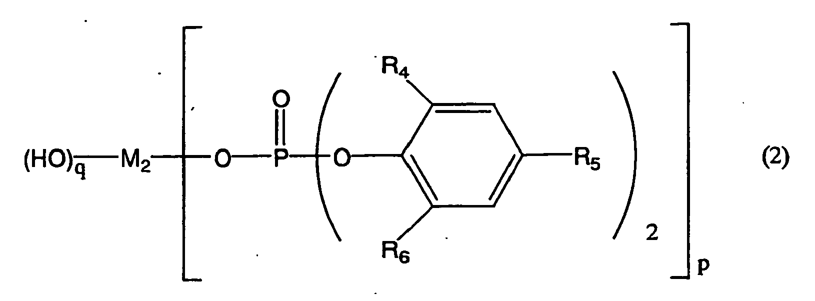 wherein R₄, R₅, and R₆ each independently represent a hydrogen atom or an alkyl group having 1 to 12 carbon atoms and may or may not be identical to each other; M₂ represents an alkali metal atom, an alkaline earth metal atom, a zinc atom, or an aluminum atom; p is an integer of 1 or 2; and q is an integer of 0 when M₂ is an alkali metal atom, an alkaline earth metal atom, or a zinc atom while q is an integer of 1 or 2 when M₂ is an aluminum atom.

The present invention is the above-described polylactic acid-based resin composition further comprising as the nucleating agent at least one selected from the group consisting of a dibenzylidene sorbitol compound represented by the following general formula (3) and a metal salt of an aliphatic carboxylic acid: 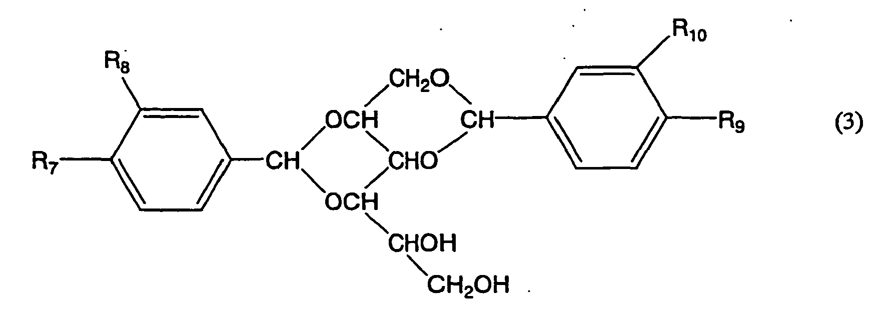 wherein R₇ and R₈ each independently represent a hydrogen atom or an alkyl group having 1 to 4 carbon atoms and may or may not be identical to each other, provided that at least one of R₇ and R₈ is an alkyl group having 1 to 4 carbon atoms; and R₉ and R₁₀ each independently represent a hydrogen atom or an alkyl group having 1 to 4 carbon atoms and may or may not be identical to each other, provided that at least one of R₉ and R₁₀ is an alkyl group having 1 to 4 carbon atoms.

The present invention is the above-described polylactic acid-based resin composition, wherein the basic inorganic aluminum compound is a hydrotalcite compound. The present invention is the above-described polylactic acid-based resin composition, wherein the hydrotalcite compound is represented by the following general formula (4):

LiₐZn_{b}Mg_{c}Al_{d}(OH)_{a+2b+2c+3d-2}CO₃·nH₂O (4)

wherein a is a number from 0 to 5.0; b is a number from 0 to 3.0: c is a number from 0.1 to 6.0; d is a number from 1.0 to 8.0; and n is a number from 0 to 30. The present invention is the above-described polylactic acid-based resin composition, wherein the hydrotalcite compound is a lithium-containing hydrotalcite compound with the amount a in the general formula (4) being in the range from 0.1 to 5.

The present invention is the above-described polylactic acid-based resin composition, further comprising hydrous magnesium silicate (talc). The present invention is the above-described polylactic acid-based resin composition, wherein the hydrous magnesium silicate (talc) has an average particle size of 10µm or less.

The present invention is a heat-resistant molded article of polylactic acid-based resin obtained by molding any of the aforementioned Polylactic acid-based resin compositions.

The present invention is a method for producing a heat-resistant molded article of polylactic acid-based resin, comprising the steps of:
melting any of the above-described polylactic acid-based resin composition,
filling a mold of a molding machine set in a temperature range of not more than the crystallization-initiating point nor less than the glass transition point, as measured by a differential scanning calorimeter (DSC), with the composition, and
molding the composition under crystallizing.

The present invention is the above-described method for producing a heat-resistant molded article of polylactic acid-based resin, wherein the temperature of the mold is set in a temperature range of not more than the crystallization-initiating point nor less than the crystallization-terminating point, as measured by a differential scanning calorimeter (DSC).

### Third aspect of the present invention:

Furthermore, the present invention is a polylactic acid-based resin composition comprising 100 parts by weight of a polymer (A) which is capable of forming a stereocomplex and is composed mainly of a polylactic acid comprising a poly-L-lactic acid composed mainly of L-lactic acid and a poly-D-lactic acid composed mainly of D-lactic acid, and 0.01 to 5.0 parts by weight of a metal phosphate to serve as a nucleating agent.

The present invention is the above-described polylactic acid-based resin composition, further comprising 0.1 parts by weight or more of a hydrous magnesium silicate (talc) to serve as the nucleating agent with respect to 100 parts by weight of the polymer (A). The present invention is the above-described polylactic acid-based resin composition, wherein the hydrous magnesium silicate (talc) has an average particle size of 10µm or less.

The present invention is the above-described polylactic acid-based resin composition, wherein the poly-L-lactic acid composed mainly of L-lactic acid comprises 70 to 100mol% of L-lactic acid units and 0 to 30mol% of D-lactic acid units and/or copolymer units other than lactic acid, and/or,
the poly-D-lactic acid composed mainly of D-lactic acid comprises 70 to 100mol% of D-lactic acid units and 0 to 30mol% of L-lactic acid units and/or copolymer units other than lactic acid.

The present invention is the above-described polylactic acid-based resin composition, wherein the poly-L-lactic acid composed mainly of L-lactic acid has a weight average molecular weight of 50,000 to 500,000, and/or, the poly-D-lactic acid composed mainly of D-lactic acid has a weight average molecular weight of 50,000 to 500,000.

The present invention is the above-described polylactic acid-based resin composition, wherein the blend ratio by weight of the poly-L-lactic acid to the poly-D-lactic acid is in the range of 10:90 to 90:10.

The present invention is the above-described polylactic acid-based resin composition wherein the metal phosphate comprises at least one metal salt of an aromatic organic phosphate represented either by the following general formula (1): 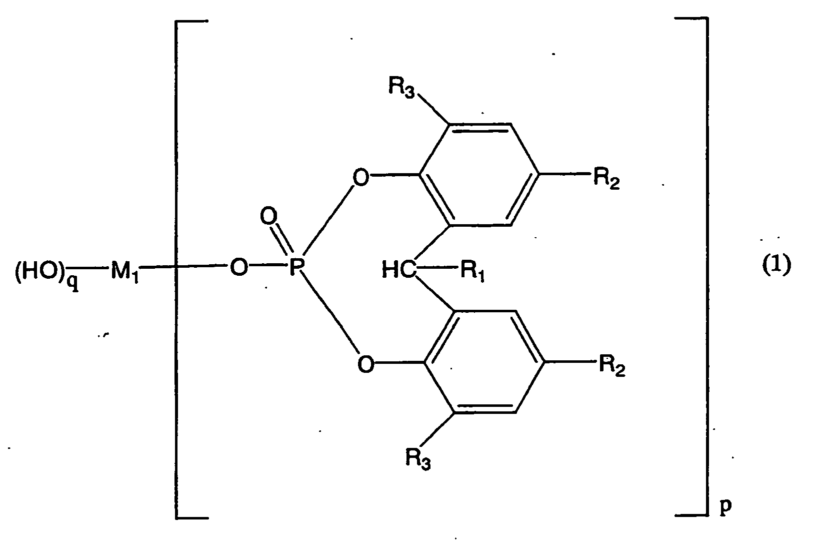 wherein R₁ represents a hydrogen atom or an alkyl group having 1 to 4 carbon atoms; R₂ and R₃ each independently represent a hydrogen atom or an alkyl group having 1 to 12 carbon atoms and may or may not be identical to each other; M₁ represents an alkali metal atom, an alkaline earth metal atom, a zinc atom, or an aluminum, atom: p is an integer of 1 or 2: and q is an integer of 0 when M₁ is an alkali metal atom, an alkaline earth metal atom or a zinc atom while q is an integer of 1 or 2 when M₁ is an aluminum atom, or by the following general formula (2): 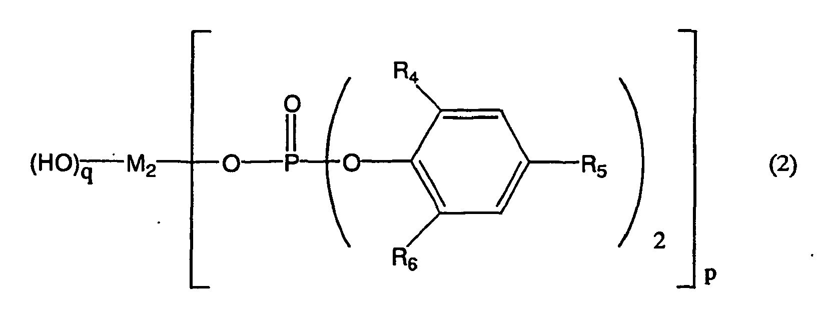 wherein R₄, R₅, and R₆ each independently represent a hydrogen atom or an alkyl group having 1 to 12 carbon atoms and may or may not be identical to each other; M₂ represents an alkali metal atom, an alkaline earth metal atom, a zinc atom, or an aluminum atom; p is an integer of 1 or 2; and q is an integer of 0 when M₂ is an alkali metal atom, an alkaline earth metal atom, or a zinc atom while q is an integer of 1 or 2 when M₂ is an aluminum atom.

The present invention is the above-described polylactic acid-based resin compound further comprising as the nucleating agent at least one selected from the group consisting of a dibenzylidene sorbitol compound represented by the following general formula (3), a hydrotalcite, and a metal salt of an aliphatic carboxylic acid: 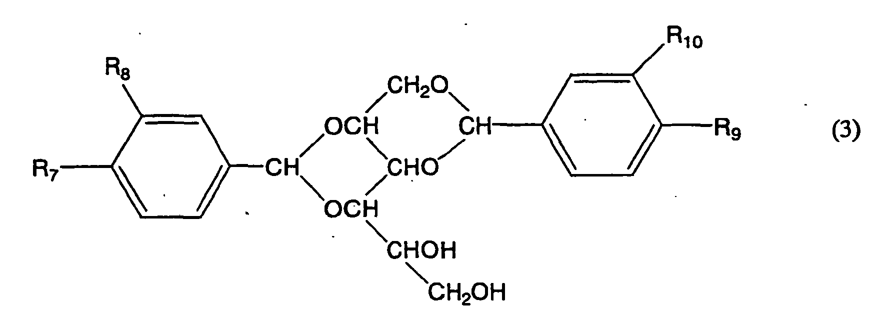 wherein R₇ and R₈ each independently represent a hydrogen atom or an alkyl group having 1 to 4 carbon atoms and may or may not be identical to each other, provided that at least one of R₇ and R₈ is an alkyl group having 1 to 4 carbon atoms; and R₉ and R₁₀ each independently represent a hydrogen atom or an alkyl group having 1 to 4 carbon atoms and may or may not be identical to each other, provided that at least one of R₉ and R₁₀ is an alkyl group having 1 to 4 carbon atoms.

The present invention is the above-described polylactic acid-based resin composition, wherein the basic inorganic aluminum compound is a hydrotalcite compound. The present invention is the above-described polylactic acid-based resin composition, wherein the hydrotalcite compound is represented by the following general formula (4):

LiₐZn_{b}Mg_{c}Al_{d}(OH)_{a+2b+2c+3d-2}CO₃·nH₂O (4)

wherein a is a number from 0 to 5.0; b is a number from 0 to 3.0; c is a number from 0.1 to 6.0; d is a number from 1.0 to 8.0; and n is a number from 0 to 30.

The present invention is the above-described polylactic acid-based resin composition, wherein the polymer (A) which is capable of forming a stereocomplex comprises an aliphatic polyester other than polylactic acid.

The present invention is a heat-resistant molded article of polylactic acid-based resin obtained by molding any of the aforementioned polylactic acid-based resin compositions.

The present invention is a method for producing a heat-resistant molded article of polylactic acid-based resin, comprising the steps of:
melting any of the above-described polylactic acid-based resin composition,
filling a mold of a molding machine set in a temperature range of not more than the melting point nor less than the glass transition point, as measured by a differential scanning calorimeter (DSC), with the composition, and
molding the composition under crystallizing.

The present invention is the above-described method for producing a heat-resistant molded article of polylactic acid-based resin, wherein the temperature of the mold is set in a temperature range of not more than the crystallization-initiating point nor less than the crystallization-terminating point as measured by a differential scanning calorimeter (DSC).

### BRIEF DESCRIPTION OF THE DRAWINGS

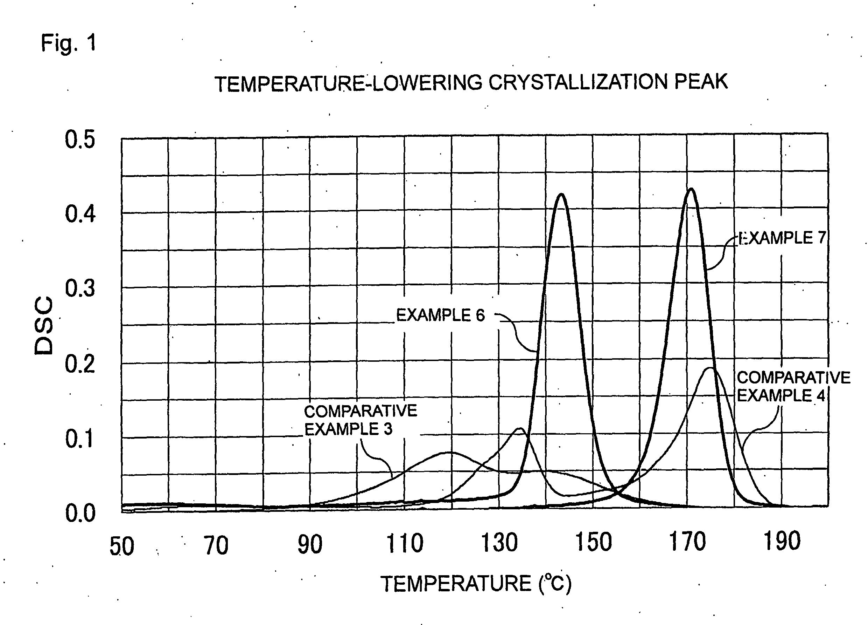

Fig. 1 is a chart showing temperature-lowering crystallization peaks taken on a DSC, observed in Examples 6 and 7 and Comparative Examples 3 and 4.

### MODES FOR CARRYING OUT THE INVENTION

### First and second aspects of the present invention:

As used herein, the term "polylactic acid-based polymer" is meant to encompass not only homopolymer of polylactic acid but also copolymers of polylactic acid. The term also includes a blend polymer composing mainly of homopolymer and/or copolymer of lactic acid.

In general, the polylactic acid-based polymer has a weight average molecular weight in the range of 50,000 to 500,000, and preferably in the range of 100,000 to 250,000. The weight average molecular weight less than 50,000 cannot provide sufficient physical properties required for practical use, whereas the weight average molecular weight greater than 500,000 tends to result in a decreased moldability.

While the molar ratio (L/D) of L-lactic acid units to D-lactic acid units that constitute the polylactic acid-based polymer may be any value between 100/0 to 0/100, it is preferred that either one unit of L-lactic acid or D-lactic acid is comprised in an amount of 75mol% or more in order to achieve a high melting point and in an amount of 90mol% or more in order to achieve an even higher melting point.

The copolymer of polylactic acid is formed by a monomer of lactic acid or lactide copolymerizes with other copolymerizable components. Examples of these components include dicarboxylic acids, polyols, hydroxycarboxylic acids, and lactones and the like having 2 or more functional groups to form ester bonds, and various polyesters, polyethers and polycarbonates and the like formed of these components.

Examples of dicarboxylic acid include succinic acid, adipic acid, azelaic acid, sebacic acid, terephthalic acid, and isophthalic acid and the like.

Examples of polyol include aromatic polyols, such as those obtained through the addition of ethylene oxide to bisphenol; aliphatic polyols, such as ethylene glycol, propylene glycol, butanediol, hexanediol, octanediol, glycerin, sorbitan, trimethylolpropane and neopentylglycol; ether glycols, such as diethylene glycol, triethylene glycol, polyethylene glycol and polypropylene glycol.

Examples of hydroxycarboxylic acid include glycolic acid, hydroxybutylcarboxylic acid, and those described in Japanese Patent Laid-Open Publication No. Hei 6-184417.

Examples of lactone include glycolide, ε-caprolactoneglycolide, ε-caprolactone, β-propiolactone, δ-butyrolactone, β- or γ-butyrolactone, pivalolactone, and δ-valerolactone.

Polylactic acid-based polymers may be synthesized using known techniques: they may be synthesized through direct dehydration condensation of lactic acid monomers or through ring-opening polymerization of cyclic lactide dimers of lactic acid as described in Japanese Patent Laid-Open Publication No. Hei 7-33861, Japanese Patent Laid-Open Publication No. Sho 59-96123, and Drafts for Symposium on Macromolecules Vol.44, pp.3198-3199.

In the case of direct dehydration condensation, any of L-lactic acid, D-lactic acid, DL-lactic acid, or mixtures thereof may be used, whereas any of L-lactide, D-lactide, DL-lactide, meso-lactide, or mixtures thereof may be used in the case of ring-opening polymerization.

Synthesis of lactides, purification and polymerization processes are described in many literatures, including US Patent 4,057,537, European Patent Publication No. 261572, Polymer Bulletin, 14, 491-495 (1985), and Makromol. Chem., 187, 1611-1628 (1986).

The catalysts for use in the polymerization reactions are not limited and may be used any known catalyst for the polymerization of lactic acid. Examples include tin-based compounds such as tin lactate, tin tartrate, tin dicaprylate, tin dilaurate, tin dipalmitate, tin distearate, tin dioleate, α-tin naphthoate, β-tin naphthoate and tin octoate, powdered tin, and tin oxide; powdered zinc, zinc halide, zinc oxide, and organozinc-based compounds; titanium-based compounds such as tetrapropyl titanate; zirconium-based compounds such as zirconium isopropoxide; antimony-based compounds such as antimony (III) oxide; bismuth-based compounds such as bismuth (III) oxide; and aluminum-based compounds such as aluminum oxide and aluminum isopropoxide.

Of these, the catalysts composed of tin or tin compounds are particularly preferred in view of their activity. For example, in the case of ring-opening polymerization, the catalyst is used in an amount of about 0.001 to 5% by weight with respect to the amount of lactide.

In general, the polymerization reaction may be carried out at a temperature of 100 to 220°C in the presence of the above-described catalyst while reaction temperature may vary depending on the type of the catalyst. Alternatively, two-step polymerization may be carried out preferably as described in Japanese Patent Laid-Open Publication No. Hei 7-247345.

As used herein, the term "blend polymer" refers to a mixture obtained by mixing an aliphatic polyester other than polylactic acid into a homopolymer of polylactic acid and/or a copolymer of polylactic acid and then melting. Blending of the aliphatic polyester other than polylactic acid can impart a flexibility and impact resistance to the molded articles. The blending proportion by weight of the aliphatic polyester other than polylactic acid is typically in the range of about 10 to 100 parts by weight with respect to 100 parts by weight of the polylactic acid homopolymer and/or the lactic acid copolymer.

In the present invention, the aliphatic polyester other than polylactic acid (referred to simply as "aliphatic polyester", hereinafter) may be made up with a single polymer or it may be a composite of two or more polymers. Among such polymers are polymers composed of an aliphatic carboxylic acid component and an aliphatic alcohol component, and aliphatic hydroxycarboxylic acid polymers obtained through ring-opening polymerization of cyclic anhydrides such as ε-caprolactone. These may be obtained either through the direct polymerization to produce high molecular weight products or through an indirect approach in which polymerization is allowed to proceed until oligomers are formed and a chain-extending agent and the like is subsequently used to produce high molecular weight products. As long as the aliphatic polyester is composed mainly of the above-described aliphatic monomer components, it may be either a copolymer or a mixture with other resins.

Preferably, the aliphatic polyester for use in the present invention comprises an aliphatic dicarboxylic acid and an aliphatic diol. Examples of the aliphatic dicarboxylic acid include compounds such as succinic acid, adipic acid, suberic acid, sebacic acid and dodecanoic acid, and anhydrates and derivatives thereof. General examples of the aliphatic diol include glycol-based compounds such as ethylene glycol, butanediol, hexanediol, octanediol and cyclohexanedimethanol, and derivatives thereof. Each of these aliphatic dicarboxylic acids and aliphatic diols is a monomer compound with an alkylene group, cyclo group, or a cycloalkylene group having 2 to 10 carbon atoms. The monomer compounds selected from these aliphatic dicarboxylic acids and aliphatic diols are subjected to condensation polymerization to produce the aliphatic polyesters. Two or more of the monomer compounds may be used for each of the carboxylic acid components or the alcohol components.

To provide branches in the polymer to increase melt viscosity, polyfunctional carboxylic acids, alcohols or hydroxycarboxylic acids that have three or more functional groups may be used as a component of the aliphatic polyester. When used in excess, these components cause the formation of crosslinks in the resulting polymer and, as a result, the polymer can lose its thermoplasticity or, even if it could retain some thermoplasticity, may form a microgel that is partially highly crosslinked. For this reason, the component with three or more functional groups must be present in the polymer in a sufficiently small amount that does not significantly affect the chemical and physical properties of the polymer. The polyfunctional component may be malic acid, tartaric acid, citric acid, trimellitic acid, pyromellitic acid, pentaerythrite, or trimethylolpropane.

Of the production methods of the aliphatic polyester, the direct polymerization technique is such that, with a proper selection of the aforementioned compounds, a high molecular weight product is obtained while moisture present in the compounds or generated during the polymerization is removed. The indirect polymerization, on the other hand, is a technique in which the one selected from the above-described compounds is allowed to undergo polymerization until oligomers are formed and small amounts of chain-extending agents, including diisocyanate compounds such as hexamethylene diisocyanate, isophorone diisocyanate, xylylene diisocyanate and diphenylmethane diisocyanate, are then used to increase the molecular weight of the product. Another technique involves the use of a carbonate compound to produce the aliphatic polyester carbonate.

The polylactic acid-based resin composition according to the first aspect of the present invention comprises each of a metal phosphate and a hydrotalcite in an amount of 0.01 to 5.0 parts by weight with respect to 100 parts by weight of a polylactic acid-based polymer.

The polylactic acid-based resin composition according to the second aspect of the present invention comprises a nucleating agent for crystallization in an amount of 0.01 to 10.0 parts by weight with respect to 100 parts by weight of a polylactic acid-based polymer and has a crystallization peak temperature in the range of 90 to 120°C as measured by a differential scanning calorimeter (DSC) and a heat of crystallization of 20J/g or more. Preferably, in this case, the resin composition comprises a metal phosphate and a hydrotalcite compound to serve as the nucleating agent for crystallization.

In the present invention, while the metal phosphate may be of any type, it preferably includes at least one of the metal salts of aromatic organic phosphates represented by the general formula (1) or (2).

In the general formula (1), R₁ represents a hydrogen atom or an alkyl group having 1 to 4 carbon atoms. Examples of the alkyl group having 1 to 4 carbon atoms and represented by R₁ include methyl, ethyl, propyl, isopropyl, butyl, *sec*-butyl, and isobutyl. R₂ and R₃ each independently represent a hydrogen atom or an alkyl group having 1 to 12 carbon atoms and may or may not be identical to each other. Examples of the alkyl group having 1 to 12 carbon atoms and represented by R₂ or R₃ include methyl, ethyl, propyl, isopropyl, butyl, *sec-*butyl, *tert*-butyl, amyl, *tert*-amyl, hexyl, heptyl, octyl, isooctyl, *text*-octyl, 2-ethylhexyl, nonyl, isononyl, decyl, isodecyl, undecyl, dodecyl and *tert*-dodecyl. M₁ represents an alkali metal atom, such as Li, Na and K, an alkaline earth metal atom, such as Mg and Ca, a zinc atom, or an aluminum atom. p is an integer of 1 or 2. q is an integer of 0 when M₁ is an alkali metal atom, an alkaline earth metal atom or a zinc atom while q is an integer of 1 or 2 when M₁ is an aluminum atom.

Of the metal phosphates represented by the general formula (1), preferred are those in which R₁, R₂, and R₃ are H, t-butyl group, and t-butyl group, respectively.

In the general formula (2), R₄, R₅ and R₆ each independently represent a hydrogen atom or an alkyl group having 1 to 12 carbon atoms and may or may not be identical to each other. The alkyl group having 1 to 12 carbon atoms and represented by R₄, R₅ and R₆ may be the same as those represented by R₂ and R₃ in the general formula (1). M₂ represents an alkali metal atom, such as Li, Na and K, an alkaline earth metal atom, such as Mg and Ca, a zinc atom, or an aluminum atom. p is an integer of 1 or 2. q is an integer of 0 when M₂ is an alkali metal atom, an alkaline earth metal atom, or a zinc atom while q is an integer of 1 or 2 when M₂ is an aluminum atom.

Of the metal phosphates represented by the general formula (2), preferred are those in which R₄, R₅, and R₆ are methyl group, t-butyl group, and methyl group, respectively.

Some of the metal phosphates are commercially available, including Adeka stab^{™} series NA-10, NA-11, NA-21, NA-30 and NA-35 manufactured by ASAHI DENKA Co., Ltd. Types and grades of the metal phosphates are suitably selected depending on each application.

The metal salts of aromatic organic phosphate may be synthesized without particular limitation and those synthesized using any known technique are allowed.

The basic inorganic aluminum compound for use in the present invention is an inorganic aluminum compound having the ability to adsorb acidic substances. Examples include hydrotalcites represented by the following formula. These compounds may be used irrespective of the size and whether the crystallization water is present or not:

LiₐZn_{b}Mg_{c}Al_{d}(OH)_{a+2b+2c+3d-2}CO₃·nH₂O (4)

wherein a is a number from 0 to 5.0; b is a number from 0 to 3.0; c is a number from 0.1 to 6.0; d is a number from 1.0 to 8.0; and n is a number from 0 to 30.

The hydrotarcite compounds for use in the present invention may be either naturally-occurring or synthetic. Methods for synthesizing the compound are described, for example, in Japanese Patent Publication No. Sho 46-2280, Japanese Patent Publication No. Sho 50-30039, Japanese Patent Publication No. Sho 51-29129, Japanese Patent Laid-Open Publication No. Sho 61-174270, and Japanese Patent Laid-Open Publication No. Hei 6-248109. According to the present invention, the compound may be used without any limitation on its crystal structure and crystal size. Preferably, the compounds represented by the general formula (4) are used as the hydrotalcite compound. Particularly preferred of these are the compounds containing Lithium. Specific examples include:
Li_{1.8}Mg₀.₆Al₄(OH)₁₈CO₃·3.6H₂O
Li₂Al₄(OH)₁₄CO₃·4H₂O
Li₁·₆Mg₁·₂Al₄(OH)₁₄CO₃
Li_{2.4}Mg_{0.3}Al₄(OH)₁₃CO₃·4.6H₂O
Li_{3.2}Mg_{2.4}Al₂(OH)₁₂CO₃·3.3H₂O and
Li_{2.4}Mg_{0.8}Al₆(OH)₂₀CO₃·5.2H₂O,
and also include LMA manufactured by FUJI CHEMICAL Co., Ltd. as commercially available products.

The surfaces of the hydrotalcite compound may be coated with a higher fatty acid such as stearic acid, a metal salt of a higher fatty acid such as an alkali metal salt of oleic acid, a metal salt of an organic sulfonic acid such as an alkali metal salt of dodecylbenzenesulfonic acid, a higher fatty acid amide, a higher fatty acid ester, or wax.

It is preferred that the polylactic acid-based resin composition of the present invention further comprises, in addition to the metal salt of an aromatic organic phosphate and the basic inorganic aluminum compound, at least one selected from the dibenzylidene sorbitol compound represented by the general formula (3) and the metal salt of an aliphatic carboxylic acid as a nucleating agent for crystallization.

In the general formula (3) representing the dibenzylidene sorbitol compound, R₇ and R₈ each independently represent a hydrogen atom or an alkyl group having 1 to 4 carbon atoms and may or may not be identical to each other, provided that at least one of R₇ and R₈ is an alkyl group having 1 to 4 carbon atoms. Examples of the alkyl group having 1 to 4 carbon atoms and represented by R₇ and R₈ include methyl, ethyl, propyl, isopropyl, butyl, isobutyl, *sea*-butyl, and *tert*-butyl, with methyl group being preferred. R₉ and R₁₀ each independently represent a hydrogen atom or an alkyl group having 1 to 4 carbon atoms and may or may not be identical to each other, provided that at least one of R₉ and R₁₀ is an alkyl group having 1 to 4 carbon atoms. Examples of the alkyl group having 1 to 4 carbon atoms and represented by R₉ and R₁₀ may be the same as those represented by R₇ and R₈ with methyl group being preferred. Preferred dibenzylidene sorbitol compounds are those in which R₇, R₈, R₉, and R₁₀ are methyl group, H, methyl group, and H, respectively.

Examples of the aliphatic carboxylic acid to form the metal salt of aliphatic carboxylic acid for use in the present invention include aliphatic carboxylic acids having 8 to 30 carbon atoms, such as octanoic acid, neooctanoic acid, decanoic acid, lauric acid, myristic acid, palmitic acid, stearic acid, oleic acid, ricinolic acid, behenic acid, and triacontanoic acid. Examples of the metal to form the metal salt of aliphatic carboxylic acid include alkali metals such as lithium, sodium, and potassium; alkaline earth metals such as magnesium, calcium, and barium; and other metals such as aluminum, lead, and zinc. While these metals may be either basic or neutral, they are preferably neutral salts.

The metal salt of an aromatic organic phosphate and the hydrotalcite compound, each serving as the nucleating agent for crystallization in the present invention (first aspect), are each added in an amount of 0.01 to 5.0 parts by weight, and preferably, in an amount of 0.1 to 3 parts by weight with respect to 100 parts by weight of the polylactic acid-based polymer. If the amount of each nucleating agent is less than 0.01 parts by weight, then the desired effects of adding the agent may not be obtained, whereas physical properties of the molded articles formed from the polylactic acid-based resin may become insufficient if the amount of each nucleating agent exceeds 5.0 parts by weight. When at least one additional component, selected from the dibenzylidene sorbitol compound and the metal salt of an aliphatic carboxylic acid, is added, in addition to the above-described metal salt of an aromatic organic phosphate and the basic inorganic aluminum compound, to serve as the nucleating agent, each component may be used in any desired amount. For example, the metal salt of an aromatic inorganic phosphate and the basic inorganic aluminum compound may make up approximately 20 to 80% by weight of the total amount of the nucleating agents with the additional component accounting for the remainder. The amount and the proportion of the nucleating agents may be properly selected depending on the type of the polylactic acid-based polymer and the desired molded article.

Preferably, the polylactic acid-based resin composition of the present invention further comprises hydrous magnesium silicate (*i*.*e*., talc), which may be of any type.

The hydrous magnesium silicate (talc) preferably has an average particle size of 10µm or less and, more preferably, from 1 to 5µm. Although talc with the average size larger than 10µm exhibits some effects, talc that is 10µm or less in size has an improved ability to facilitate the formation of crystal nuclei, thus improving the heat resistance of the molded articles.

Preferably, the hydrous magnesium silicate (talc) is comprised in an amount of 0.01 to 5.0 parts by weight, more preferably, from 0.01 to 3.0 parts by weight. When added in an amount less than 0.01 parts by weight, the hydrous magnesium silicate cannot provide desired effects, whereas it may cause turbidity in the resin composition when added in an amount of 5.0 parts by weight or more.

According to the present invention, each component of the nucleating agent may be blended with the polylactic acid-based polymer using any known method. For example, powder or pellets of the polylactic acid-based polymer may be dry-blended with the components of the nucleating agent, or some of the components of the nucleating agent may be pre-blended prior to the dry-blending of the other components. For example, the components may be mixed using a mill roll, a banbury mixer, a super mixer or other proper mixers, and kneaded with a uniaxial or biaxial extruder or the like. In general, the mixing/kneading process is carried out at temperatures of approximately 120 to 220°C. The components of the nucleating agent may be added during the polymerization of the polylactic acid-based polymer. Alternatively, a master batch comprising high concentrations of the components of the nucleating agent may be produced and added to the polylactic acid-based polymer.

When necessary, the polylactic acid-based resin composition of the present invention may further comprise various additives including a known plasticizer, an antioxidant, a heat stabilizer, a photostabilizer, a UV-absorber, a pigment, a coloring agent, various fillers, an antistatic, a mold release agent, a perfume, a lubricant, a flame-retardant, a foaming agent, a bulking agent, antibacterial/fungal agent, and other nucleating agents.

As measured by a differential scanning calorimeter (DSC), the polylactic acid-based resin composition of the present invention has a crystallization peak temperature in the range of 90 to 120°C and preferably in the range of 95 to 115°C and has a heat of crystallization of 20J/g or more and preferably 21J/g or more. While no specific upper limit is given for the heat of crystallization, it is approximately 60J/g. The crystallization peak temperature below 90°C can result in an increase in the length of the cooling time during the molding process, whereas the crystallization peak temperature above 120°C can lead to a higher mold temperature and thus a prolonged cooling time. In either case, a longer molding cycle would result. In comparison, if the heat of crystallization is less than 20J/g, then the moldability of the resin composition at its crystallizing temperature will be decreased, as will the heat resistance, the tensile strength, and the impact strength of the resulting molded articles.

The metal salt of an aromatic organic phosphate and the hydrotalcite compound, each preferably serving as the nucleating agent in the present invention (second aspect), is added in an amount of 0.01 to 5.0 parts by weight, and preferably, in an amount of 0.1 to 3 parts by weight with respect to 100 parts by weight of the polylactic acid-based polymer. If the amount of each nucleating agent is less than 0.01 parts by weight, then the desired effects of adding the agent may not be obtained, whereas physical properties of the molded articles formed from the polylactic acid-based resin may become insufficient if the amount of each nucleating agent exceeds 5.0 parts by weight. When at least one additional component, selected from the dibenzylidene sorbitol compound and the metal salt of an aliphatic carboxylic acid, is added, in addition to the above-described metal salt of an aromatic organic phosphate and/or the basic inorganic aluminum compound, to serve as the nucleating agent, each component may be used in any desired amount. For example, the metal salt of an aromatic inorganic phosphate and/or the basic inorganic aluminum compound may make up approximately 20 to 80% by weight of the total amount of the nucleating agents with the additional component accounting for the remainder. The amount and the proportion of the nucleating agent may be properly selected depending on the type of the polylactic acid-based polymer and the desired molded article.

The present invention also concerns a heat-resistant molded article made from the above-described polylactic acid-based resin composition, as well as a process for producing such a molded article.

One way to crystallize the polylactic acid-based resin composition is to anneal a molded article at a temperature that allows the resin to crystallize. This approach, however, has a drawback that the molded article tends to deform during the crystallization by annealing. To counteract this problem, the mold for use in molding the polylactic acid-based resin composition may be adjusted to a temperature that allows the resin to crystallize and is retained at the temperature for a predetermined period of time.

According to the present invention, the polylactic acid-based resin composition is first melted. A mold mounted on a molding machine is then filled with the molten resin. The mold is adjusted to a predetermined temperature that allows the resin composition to crystallize. This temperature lies in the range of not more than the crystallization-initiating point nor less than the glass transition point and preferably in the range of not more than the crystallization-initiating point nor less than the crystallization-terminating point, as measured by a differential scanning calorimeter (DSC). The resin composition is subsequently retained in the mold for a predetermined period of time to allow it to mold with crystallization. Comprising the above-described nucleating agent, the polylactic acid-based resin composition of the present invention undergoes crystallization in the mold to obtain a highly heat/impact-resistant article of the polylactic acid-based resin.

Since the setting of the mold temperature may vary depending on the type of the polylactic acid-based resin composition to be molded, crystallizing temperatures (i.e., crystallization peak temperature, crystallization-initiating temperature, and crystallization-terminating temperature) are measured in advance using the DSC technique so that the mold temperature may be adjusted to a temperature in the range of not more than the crystallization-initiating temperature nor less than the glass transition temperature, preferably in the range of not more than the crystallization-initiating temperature nor less than the crystallization-terminating temperature. With the mold temperature falling within this range, the resin composition can readily undergo crystallization and accurately sized molded articles can be obtained. In contrast, if the mold temperature deviates from the above range, crystallization becomes slow and it takes longer for the resin composition to solidify during the molding, resulting in inappropriateness for practical use.

In molding the polylactic acid-based resin composition of the present invention, the same molding techniques as used to mold common plastics, such as injection molding, blow molding, vacuum molding and compression molding, may be used to readily form bars, bottles, containers and other various molded articles.

### Third aspect of the present invention:

In the present invention, the polymer (A) capable of forming a stereocomplex mainly comprises a polylactic acid comprising a poly-L-lactic acid composed mainly of L-lactic acid and a poly-D-lactic acid composed mainly of D-lactic acid. The polylactic acid may be any type of polylactic acid that can form a stereocomplex and may be polylactic acid homopolymer or polylactic acid copolymer. Also, the polymer (A) capable of forming a stereocomplex may comprise other polymers, provided that it mainly comprises the polylactic acid capable of forming a stereocomplex.

It is preferred that the poly-L-lactic acid composed mainly of L-lactic acid comprises 70 to 100mol%, preferably 90 to 100mol%, of L-lactic acid unit and 0 to 30mol%, preferably 0 to 10mol%, of D-lactic acid unit and/or copolymer components other than lactic acid. Likewise, it is preferred that the poly-D-lactic acid composed mainly of D-lactic acid comprises 70 to 100%, preferably 90 to 100mol%, of D-lactic acid unit and 0 to 30mol%, preferably 0 to 10mol%, of L-lactic acid unit and/or copolymer components other than lactic acid. The formation of the stereocomplexes is facilitated when both of the poly-L-lactic acid composed mainly of L-lactic acid and the poly-D-lactic acid composed mainly of D-lactic acid are made up with respective monomer units of the above-specified range.

The poly-L-lactic acid preferably has a weight average molecular weight of 50,000 to 500,000, more preferably 100,000 to 250,000. Likewise, the poly-D-lactic acid preferably has a weight average molecular weight of 50,000 to 500,000, more preferably 100,000 to 250,000. If the weight average molecular weight of the poly-L-lactic acid or the poly-D-lactic acid is less than 50,000, then the resulting molded articles tend to have a reduced strength, whereas, if the weight average molecular weight exceeds 500,000, the fluidity of the polymer composition is reduced, making the molding difficult.

While the mixing ratio by weight of the poly-L-lactic acid to the poly-D-lactic acid may be any value, it is preferably in the range of 10:90 to 90:10 (=(L):(D)). The formation of stereocomplexes is facilitated when the mixing ratio falls within this range.

The poly-L-lactic acid may comprise at most 30mol%, preferably at most 10mol%, of copolymer components other than lactic acid. Likewise, the poly-D-lactic acid may comprise at most 30mol%, preferably at most 10mol%, of copolymer components other than lactic acid. The monomer components to form the copolymer are monomers other than lactic acid that can copolymerize with lactic acid monomers or lactides. Examples of the other monomer components include dicarboxylic acids, polyols, hydroxycarboxylic acids and lactones that have two or more functional groups capable of forming ester bonds, and various polyesters, polyethers and polycarbonates composed of these various components. These other monomer components are the same as those described in the foregoing sections of the first and the second aspects of the invention.

The poly-L-lactic acid and the poly-D-lactic acid may be synthesized by using known techniques: they may be synthesized through direct dehydration condensation or through ring-opening polymerization of cyclic lactide dimers of lactic acid, as described in Japanese Patent Laid-Open Publication No. Hei 7-33861, Japanese Patent Laid-Open Publication No. Sho 59-96123, and Drafts for Symposium on Macromolecules Vol.44, pp.3198-3199.

When the poly-L-lactic acid or the poly-D-lactic acid is obtained through direct dehydration condensation, any of L-lactic acid, D-lactic acid, DL-lactic acid or a mixture thereof is used so that the monomer units are present in the above-specified respective molar percentages. Likewise, when the poly-L-lactic acid or the poly-D-lactic acid is obtained through ring-opening polymerization, any of L-lactide, D-lactide, DL-lactide, meso-lactide or a mixture thereof is used so that the monomer units are present in the above-specified respective molar percentages.

As for the catalysts for use in the polymerization reaction, they are the same as those described in the foregoing sections of the first and the second aspects of the invention, and are not limited to particular ones. The catalyst may be any known catalyst commonly in use for lactic acid polymerization. The polymerization process is also the same as described above.

The polymer (A) capable of forming a stereocomplex may comprise other polymers, provided that it mainly comprises the polylactic acid capable of forming a stereocomplex. One example of other polymer is aliphatic polyesters other than polylactic acid, which are the same as those described in the foregoing sections of the first and the second aspects of the invention. Blending the aliphatic polyester can impart flexibility and impact resistance to the molded articles. The proportion of the aliphatic polyester other than polylactic acid is typically in the range of about 10 to 100 parts by weight with respect to 100 parts by weight of the polylactic acid.

The polylactic acid-based polymer composition of the present invention comprises at least one metal phosphate to serve as a nucleating agent for crystallization in an amount of 0.01 to 5.0 parts by weight with respect to 100 parts by weight of the polymer (A) capable of forming a stereocomplex mainly comprising the polylactic acid. Preferably, the polylactic acid-based resin composition further comprises 0.1 parts by weight or more of hydrous magnesium silicate (talc) with respect to 100 parts by weight of the polymer (A).

According to the present invention, comprising of hydrous magnesium silicate (talc) in addition to the metal phosphate facilitates formation of crystal nuclei of the polymer composition. Not only does this facilitate the crystallization but it also reduces the crystal size and improves the physical properties.

The hydrous magnesium silicate (talc) preferably has an average particle size of lops or less and more preferably, from 1 to 5µm. Although the hydrous magnesium silicate (talc) with the average particle size of more than 10µm may have some effects, it can facilitate the formation of crystal nuclei more effectively and can effectively improve the heat resistance of the molded articles when having an average size of less than 10µm.

The amount of the hydrous magnesium silicate (talc) to be blended is preferably 0.1 parts by weigh or more, for example, from 0.1 to 5.0 parts by weight, and more preferably, from 0.1 to 3.0 parts by weight with respect to 100 parts by weight of the polymer (A) capable of forming a stereocomplex. When added in an amount of less than 0.1 parts by weight, adding the hydrous magnesium silicate may not exhibit desired effects, whereas it may cause turbidity in the polymer composition when added in an amount of 5.0 parts by weight or more, making the polymer unsuitable for use in molded articles that require a transparency. Alternatively, the hydrous magnesium silicate (talc) may be added in an amount of 5.0 parts by weight or more to serve as an inorganic filler to improve the rigidity of the molded articles. In such a case, the amount of the hydrous magnesium silicate (talc) is properly selected from the range of 5.0 parts by weight to 100 parts by weight.

A preferred example of the metal phosphate for use in the present invention is a metal salt of an aromatic organic phosphate represented by the general formula (1) or (2). The metal salts of an aromatic organic phosphate may be used either individually or in combination of two or more. The metal salts of an aromatic organic phosphate represented by the general formula (1) or (2) are the same as those described in the foregoing sections of the first and the second aspects of the invention. Preferred examples are also the same as those described in these sections.

Aside from the metal salt of an aromatic organic phosphate, the polylactic acid-based resin composition of the present invention preferably comprises at least one selected from dibenzylidene sorbitol compounds represented by the general formula (3), basic inorganic aluminum compounds, and metal salts of aliphatic carboxylic acids. The dibenzylidene sorbitol compounds represented by the general formula (3), the basic inorganic aluminum compounds, and the metal salts of aliphatic carboxylic acids are the same respectively as those described in the foregoing sections of the first and the second aspects of the invention. Preferred examples are also the same respectively as those described in these sections.

According to the present invention, the amount of the metal phosphate to be blended is in the range of 0.01 to 5.0 parts by weight, preferably in the range of 0.1 to 3 parts by weight, with respect to 100 parts by weight of the polymer (A) capable of forming a stereocomplex. If the amount of the metal phosphate is less than 0.01 parts by weight, then the desired effects of adding the agent may not be obtained, whereas physical properties of the molded articles formed from the polylactic acid-based polymer may become insufficient if the amount exceeds 5.0 parts by weight. Aside from the metal phosphate, at least one compound selected from the dibenzylidene sorbitol compound, the hydrotalcite compound, and the metal salt of an aliphatic carboxylic acid may be used as an additional component. While this additional component may be used in any amount, it is preferably used in an amount of 0.1 to 5.0 parts by weight with respect to 100 parts by weight of the polymer (A) and in an amount 0.1 to 10 times the amount of the metal phosphate. The amount and the proportion of the additional component may be properly selected depending on the type of the polylactic acid-based polymer and the desired molded article.

According to the present invention, the metal phosphate may be blended using any known method, as may the optional components of the hydrous magnesium silicate (talc), the dibenzylidene sorbitol compound, the hydrotalcite compound and the metal salt of an aliphatic carboxylic acid. For example, the same methods as those described in the foregoing sections of the first and the second aspects of the invention may be employed.

When necessary, the polylactic acid-based resin composition of the present invention may further comprise various additives including a known plasticizer, an antioxidant, a heat stabilizer, a photostabilizer, a UV-absorber, a pigment, a coloring agent, various fillers, an antistatic, a mold release agent, a perfume, a lubricant, a flame-retardant, a foaming agent, a bulking agent, antibacterial/fungal agent, and other nucleating agents.

The present invention further concerns a heat-resistant molded article made from the above-described polylactic acid-based resin composition, as well as a process for producing such a molded article.

One way to crystallize the polylactic acid-based resin composition is to anneal a molded article at a temperature that allows the resin to crystallize. This approach, however, has a drawback that the molded article tends to deform during the crystallization by annealing. To counteract this problem, the mold may be adjusted to a temperature that allows the resin to crystallize and is retained at the temperature for a predetermined period of time.

According to the present invention, the polylactic acid-based resin composition is first melted. A mold mounted on a molding machine is then filled with the molten resin. The mold is adjusted to a predetermined temperature that allows the resin composition to crystallize. This temperature lies in the range of not more than the melting point nor less than the glass transition point and preferably in the range of not more than the crystallization-initiating point nor less than the crystallization-terminating point, as measured by a differential scanning calorimeter (DSC). The resin composition is subsequently retained in the mold for a predetermined period of time to allow it to mold with crystallization. Comprising the above-described metal phosphate and, in preferred cases, further comprising the hydrous magnesium silicate (talc), the polylactic acid-based resin composition of the present invention undergoes crystallization in the mold to obtain a highly heat/impact-resistant article of the polylactic acid-based resin.

Since the setting of the mold temperature may vary depending on the type of the polylactic acid-based resin composition to be molded, crystallizing temperatures (i.e., crystallization peak temperature, crystallization-initiating temperature, and crystallization-terminating temperature) are measured in advance using the DSC technique so that the mold temperature may be adjusted to a temperature in the range of not more than the melting point nor less than the glass transition temperature, preferably in the range of not more than the crystallization-initiating temperature nor less than the crystallization-terminating temperature. With the mold temperature falling within this range, the resin composition can readily undergo crystallization and accurately sized molded articles can be obtained. In contrast, if the mold temperature deviates from the above range, crystallization becomes slow and it takes longer for the resin composition to solidify during the molding, resulting in inappropriateness for practical use.

In molding the polylactic acid-based resin composition of the present invention, the same molding techniques as used to mold common plastics, such as injection molding, blow molding, vacuum molding and compression molding, may be used to readily form bars, bottles, containers and other various molded articles. In preferred embodiments of the present invention, it is important to use hydrous magnesium silicate (talc) along with the metal phosphate. When hydrous magnesium silicate (talc), a nucleating agent known to be effective for use with polylactic acid, is applied to the polymer capable of forming a stereocomplex, double crystallization peaks are observed, and, though the formation of crystal nuclei is promoted, the resulting crystal is a heterogeneous crystal in which stereo crystal and polylactic acid homo crystal are present. The metal phosphate also promotes the crystallization of polylactic acid. When used alone, however, the metal phosphate brings about a lower crystallization temperature and a lower crystallization rate than are possible by the use of talc. It is only when the talc and the metal phosphate are together applied to the polymer capable of forming a stereocomplex that a single crystallization peak is observed with a high crystallization temperature and a high heat of crystallization. Also, the crystallized polymer obtained by this process has a melting point of approximately 210°C, which is significantly lower than the melting point of conventional stereocomplex crystal of 230°C. Furthermore, the polymer has an improved workability, which is the property that poses a problem in molding conventional stereo polymers. The polymer also exhibits an improved heat resistance as compared to the conventional lactic acid homopolymer.

In each of the first, the second and the third aspects of the present invention, the crystallization temperature and the heat of crystallization were measured by a differential scanning calorimeter (DSC-60 manufactured by Shimadzu Corporation): 10mg sample pellets were heated from room temperature to 250°C at a rate of 50°C/min, and were retained for 5 minutes to make the sample uniform. Subsequently, the sample was allowed to cool at a rate of 5°C/min, during which time the temperature at which crystallization was initiated, the temperature at which crystallization peaked, and the temperature at which crystallization was terminated were measured. The magnitude of the crystallization peak (heat of crystallization) so measured was then used as an index of the heat resistance: a larger heat of crystallization at a process of cooling indicates a higher degree of crystallization and thus, a higher heat resistance. The melting point of the resulting crystals was measured by again taking measurements by DSC at a process of reheating the sample until 250°C at a rate of 10°C/min.

A tensile test and an Izod impact test were conducted according to JIS K 7113 (No. 1 sample piece) and JIS K 7110 (notched No. 2 sample piece), respectively.

In the present invention, high-load distortion temperature according to JIS K 7207A standard was used as an index for the heat resistance. As used herein, the term "high-load distortion temperature" refers to a temperature of a heat-conductive medium determined in the following manner: a sample piece immersed in a heat sink is applied a 1.8MPa bending stress while a heat conductive medium is heated at a constant rate. The temperature of the heat-conductive medium is measured when the sample piece is distorted by a predetermined amount, thus giving the high-load distortion temperature. According to the present invention, the molded articles of the heat-resistant polylactic acid-based resin, even when used, for example, in parts of home electric appliances that are rarely exposed to high temperatures, need to have a high-load distortion temperature of 80°C or above for practical use, preferably 90°C or above, and more preferably 100°C or above, while the high-load distortion temperature may vary depending on the amount of the nucleating agent added. The upper limit thereof is not particularly restricted, but is 140°C or around.

In the present invention, the weight average molecular weight (Mw) of the lactic acid-based polymer is measured by GPC analysis relative to polystyrene standard.

### EXAMPLES

The present invention will now be described in further detail with reference to several examples.

Examples 1 through 5 are embodiments of the first and the second aspects of the invention.

### [Example 1]

A set of components shown in Table 1 were dry-blended with one another, and the mixture was melted and mixed in a biaxial kneading extruder at 200°C for an average time period of 4 minutes and was extruded from a mouthpiece into strands. The strands were then water-cooled and cut into pellets of a polylactic acid-based polymer composition comprising a nucleating agent. The measurements taken of the resulting pellets on a DSC gave a crystallization peak temperature of 105°C, a crystallization-initiating temperature of 116°C, a crystallization-terminating temperature of 95°C, and a heat of crystallization of 35J/g.

The resulting pellets were vacuum-dried at 80°C until absolutely dry and were then injection-molded with the mold temperature kept at 100°C and the cooling time at 45 seconds. This gave a sample piece for the evaluation of physical properties according to JIS. The results of the evaluation of the sample piece are shown in Table 2 below.

### [Example 2]

Pellets of another polylactic acid-based polymer composition were obtained in the same manner as in Example 1, except that another set of components shown in Table 1 was used. The measurements taken of the pellets by the DSC gave a crystallization peak temperature of 114°C, a crystallization-initiating temperature of 125°C, a crystallization-terminating temperature of 104°C, and a heat of crystallization of 33J/g. The pellets were injection-molded in the same manner as in Example 1 to give another sample piece for the evaluation of the physical properties according to JIS. The results of the evaluation of the sample piece are shown in Table 2 below.

### [Example 3]

Pellets of another polylactic acid-based polymer composition were obtained in the same manner as in Example 1, except that another set of components shown in Table 1 was used. The measurements taken of the pellets by the DSC gave a crystallization peak temperature of 99°C, a crystallization-initiating temperature of 104°C, a crystallization-terminating temperature of 83°C, and a heat of crystallization of 28J/g. The pellets were injection-molded in the same manner as in Example 1 to give another sample piece for the evaluation of the physical properties according to JIS. The results of the evaluation of the sample piece are shown in Table 2 below.

### [Example 4]

Pellets of another polylactic acid-based polymer composition were obtained in the same manner as in Example 1, except that another set of components shown in Table 1 was used. The measurements taken of the pellets by the DSC gave a crystallization peak temperature of 112°C, a crystallization-initiating temperature of 122°C, a crystallization-terminating temperature of 101°C, and a heat of crystallization of 42J/g. The pellets were injection-molded in the same manner as in Example 1 to give another sample piece for the evaluation of the physical properties according to JIS. The results of the evaluation of the sample piece are shown in Table 2 below.

### [Example 5]

Pellets of another polylactic acid-based polymer composition were obtained in the same manner as in Example 1, except that another set of components shown in Table 1 was used. The measurements taken of the pellets by the DSC gave a crystallization peak temperature of 100°C, a crystallization-initiating temperature of 105°C, a crystallization-terminating temperature of 96°C, and a heat of crystallization of 25J/g. The pellets were injection-molded in the same manner as in Example 1 to give another sample piece for the evaluation of the physical properties according to JIS. The results of the evaluation of the sample piece are shown in Table 2 below.

### [Comparative Example 1]

Polylactic acid shown in Table 1 was melted and mixed in a biaxial kneading extruder at 200°C for an average time period of 4 minutes and was extruded from a mouthpiece into strands. The strands were then water-cooled and cut into pellets of polylactic acid. The measurements taken of the pellets on a DSC gave a crystallization peak temperature of 99°C, a crystallization-initiating temperature of 112°C, a crystallization-terminating temperature of 85°C, and a heat of crystallization of 15J/g.

The resulting pellets were vacuum-dried at 80°C until absolutely dry and were then injection-molded with the mold temperature kept at 100°C and the cooling time at 45 seconds. The molded product could not be removed from the mold, however. Separately, the pellets were vacuum-dried at 80°C until absolutely dry and were then injection-molded with the mold temperature kept at 40°C and the cooling time at 45 seconds. This gave a sample piece for the evaluation of physical properties according to JIS. The results of the evaluation of the sample piece are shown in Table 2 below.

### [Comparative Example 2]

Pellets of a polylactic acid-based polymer composition were obtained in the same manner as in Example 1, except that another set of components shown in Table 1 was used. The measurements taken of the pellets by the DSC gave a crystallization peak temperature of 101°C, a crystallization-initiating temperature of 115°C, a crystallization-terminating temperature of 90°C, and a heat of crystallization of 16J/g. The resulting pellets were vacuum-dried at 80°C until absolutely dry and were then injection-molded with the mold temperature kept at 100°C and the cooling time at 45 seconds. The molded product could not be removed from the mold, however. Separately, the pellets were vacuum-dried at 80°C until absolutely dry and were then injection-molded with the mold temperature kept at 40°C and the cooling time at 45 seconds. This gave a sample piece for the evaluation of physical properties according to JIS. The results of the evaluation of the sample piece are shown in Table 2 below.

**Table 1**

| | Example 1 | Example 2 | Example 3 | Example 4 | Example 5 | Comparative Example 1 | Comparative Example 2 |
|---|---|---|---|---|---|---|---|
| compound | parts by weight | parts by weight | parts by weight | parts by weight | parts by weight | parts by weight | parts by weight |
| poly-lactic acid ("Lacty" manufactured by Shimadzu Corporation, Mw = 160,000) | 100 | 100 | 100 | 100 | 100 | 100 | 100 |
| 1·3,2·4-di(*p*-methyl benzylidene sorbitol) | - | - | - | - | 0.2 | - | 1 |
| aluminum bis(2,2'-methylene bis-4,6-di-*tert*-butyl-phenyl phosphate)hydroxide | 0.5 | 0.5 | 0.5 | 0.5 | 0.5 | - | - |
| lithium myristate | - | - | 0.1 | 0.1 | 0.1 | - | - |
| hydrotalcite compound | 0.5 | 0.5 | 0.4 | 0.4 | 0.4 | - | - |
| talc fine powder ("Micro Ace P-6", manufactured by Nippon talc Co., Ltd.) | - | 1 | - | 1 | - | - | - |

**Table 2**

| | Example 1 | Example 2 | Example 3 | Example 4 | Example 5 | Comparative Example 1 | Comparative Example 2 |
|---|---|---|---|---|---|---|---|
| peak crystallization temperature(°C) | 105 | 114 | 99 | 112 | 100 | 99 | 101 |
| heat of crystallization (J/g) | 35 | 33 | 28 | 42 | 25 | 15 | 16 |
| high-load distortion temperature(°C) | 110 | 119 | 107 | 118 | 107 | 58 | 58 |
| tensile strength (Mpa) | 72 | 72 | 72 | 72 | 73 | 63 | 63 |
| tensile modulus (MPa) | 3,188 | 3,258 | 3,214 | 3,264 | 3,230 | 2,643 | 2,655 |
| Izod impact strength (kJ/m²) | 3.1 | 3.3 | 3.0 | 3.3 | 3.1 | 2.6 | 2.7 |

The results of Tables 1 and 2 indicate that the injection-molded articles made from the polylactic acid-based polymer compositions of Examples 1 through 5, each an embodiment of the present invention, each had an improved heat resistance, tensile strength, tensile modulus, and Izod impact strength. The sample pieces of Examples 2 and 4, each of which was made from the polylactic acid-based polymer composition comprising talc along with the nucleating agent, exhibited a higher heat resistance. On the other hand, in Comparative Example 1, which did not comprise the nucleating agent, exhibited a significant decrease in the moldability as well as heat resistance and strength of the molded article. Though comprising the nucleating agent, because of the small heat of crystallization, Comparative Example 2 showed a significant decrease in the moldability as well as heat resistance and strength of the molded article.

Examples 6 and 7 are embodiments of the third aspect of the invention.

### [Example 6]

50 parts by weight of poly-L-lactic acid ("Lacty" manufactured by Shimadzu Corporation, Mw = 180,000), 50 parts by weight of poly-D-lactic acid synthesized from D-lactide (Mw = 180,000), 0.5 parts by weight of aluminum bis(2,2'-methylenebis-(4,6-di-tert-butyl-phenyl)phosphate)·hydroxide, 0.2 parts by weight of lithium myristate, and 0.3 parts by weight of Li_{1.8}Mg_{0.6}Al₄(OH)₁₈CO₃·3.6H₂O, a lithium-containing hydrotalcite compound, were dry-blended with one another, and the mixture was melted and mixed in a biaxial kneading extruder at 220°C for an average detention time period of 4 minutes and was extruded from a mouthpiece into strands. The strands were then water-cooled to obtain a chip C1 of a lactic acid-based stereo polymer composition.

The measurements taken of the chip C1 on a DSC gave a crystallization peak temperature of 143°C, a crystallization-initiating temperature of 160°C, a crystallization-terminating temperature of 130°C, and a heat of crystallization of 49J/g. The chip C1 also had a glass transition temperature of 58.4°C and a melting point of 204°C observed as a single peak.

The chip C1 was further air-dried at 120°C under a nitrogen atmosphere until absolutely dry and was then injection-molded into a sample strip with the mold temperature kept at 140°C. Measurements taken of the sample piece gave a high-load distortion temperature of 132°C. The sample piece also exhibited a high impact resistance.

### [Example 7]

50 parts by weight of poly-L-lactic acid ("Lacty" manufactured by Shimadzu Corporation, Mw = 180,000), 50 parts by weight of poly-D-lactic acid synthesized from D-lactide (Mw = 180,000), 1 part by weight of talc fine powder (Micro Ace P-6, manufactured by Nippon talc Co., Ltd.; Average particle size as determined by laser diffraction = 4µm), 0.5 parts by weight of aluminum bis(2,2'-methylenebis-(4,6-di-*tert*-butyl-phenyl)phosphate)·hydroxide, and 0.5 parts by weight of Li_{1.8}Mg_{0.6}Al₄(OH)₁₈CO₃·3.6H₂O, a lithium-containing hydrotalcite compound, were dry-blended with one another, and the mixture was melted and mixed in a biaxial kneading extruder at 220°C for an average detention time period of 4 minutes and was extruded from a mouthpiece into strands. The strands were then water-cooled to obtain a chip C2 of a lactic acid-based polymer composition.

The measurements taken of the chip C2 on a DSC gave a crystallization peak temperature of 171°C, a crystallization-initiating temperature of 184°C, a crystallization-terminating temperature of 150°C, and a heat of crystallization of 58J/g. The chip C2 also had a glass transition temperature of 60.2°C and a melting point of 209°C observed as a single peak.

The chip C2 was further air-dried at 120°C under a nitrogen atmosphere until absolutely dry and was then injection-molded into a sample strip with the mold temperature kept at 170°C. Measurements taken of the sample piece gave a high-load distortion temperature of 150°C. The sample piece also exhibited a high impact resistance.

### [Comparative Example 3]

50 parts by weight of poly-L-lactic acid ("laity" manufactured by Shimadzu Corporation, Mw = 180,000), and 50 parts by weight of poly-D-lactic acid synthesized from D-lactide (Mw = 180,000) were melted and mixed in a biaxial kneading extruder at 220°C for an average detention time period of 4 minutes and was extruded from a mouthpiece into strands. The strands were then water-cooled to obtain a chip C3 of a lactic acid-based stereo polymer composition.

The measurements taken of the chip C3 on a DSC gave a broad peak with a crystallization peak temperature of 118°C (an inflection point also observed at 138°C), a crystallization-initiating temperature of 165°C, a crystallization-terminating temperature of 90°C, and a heat of crystallization of 37J/g. The chip C3 also had a glass transition temperature of 58.4°C and melting points observed as a double peak: 168°C for homo crystal and 215°C for stereo crystal.

The chip C3 was further air-dried at 120°C under a nitrogen atmosphere until absolutely dry and was then injection-molded into a sample strip with the mold temperature kept at 120°C. Measurements taken of the sample piece gave a high-load distortion temperature of 70°C.

### [Comparative Example 4]

50 parts by weight of poly-L-lactic acid ("Lacty" manufactured by Shimadzu Corporation, Mw = 180,000), 50 parts by weight of poly-D-lactic acid synthesized from D-lactide (Mw = 180,000), and 1 part by weight of talc fine powder (Micro Ace P-6, manufactured by Nippon talc Co., Ltd.) were dry-blended with one another, and the mixture was melted and mixed in a biaxial kneading extruder at 220°C for an average detention time period of 4 minutes and was extruded from a mouthpiece into strands. The strands were then water-cooled to obtain a chip C4 of a lactic acid-based stereo polymer composition.

The measurements taken of the chip C4 on a DSC gave crystallization peak temperatures at 175°C and at 134°C, crystallization-initiating temperatures at 190°C and at 144°C, crystallization-terminating temperatures at 168°C and at 130°C, respectively observed as a double peak. The heats of crystallization were 38J/g and 14J/g, respectively. The peaks observed at higher temperatures than the other of the double peaks are due to stereo crystals whereas the peaks at lower temperatures are due to homo crystals, indicating that the resulting sample was not in the state of complete stereo crystal. The chip C4 also had a glass transition temperature of 59.3°C and melting points observed as a double peak: 170°C for homo crystal and 218°C for stereo crystal.

The chip C4 was further air-dried at 120°C under a nitrogen atmosphere until absolutely dry and was then injection-molded into a sample strip with the mold temperature kept at 170°C. Measurements taken of the sample piece gave a high-load distortion temperature of 75°C.

Shown in Fig. 1 is a chart depicting crystallization peaks taken on a DSC as the temperature was decreased, observed in Examples 6 and 7 and Comparative Examples 3 and 4.

### INDUSTRIAL APPLICABILITY

According to the present invention, a nucleating agent blended in a polylactic acid-based polymer accelerates the rate at which the polylactic acid-based polymer undergoes crystallization without compromising on the tensile strength or the impact strength. Furthermore, highly heat-resistant molded articles can be obtained by allowing the polylactic acid-based polymer composition to crystallize in molds.

According to the present invention, a polylactic acid-based resin composition is provided from which molded articles with a high tensile strength, high impact strength and high heat resistance can be molded with improved moldability. Also provided is a heat-resistant polylactic acid-based resin molded article with an improved tensile strength and impact strength, as well as a simple and highly efficient process for manufacturing such a heat-resistant molded article of polylactic acid-based resin.

According to the present invention, the inclusion of a metal phosphate to serve as a nucleating agent in a polymer capable of forming a stereocomplex can increase the degree of crystallization of the lactic acid-based polymer. In a preferred embodiment, hydrous magnesium silicate. (*i*.*e*., talc) is used along with a metal phosphate. Furthermore, highly heat-resistant molded articles can be obtained by allowing the lactic acid-based polymer composition to crystallize in molds.

According to the present invention, a polylactic acid-based resin composition is provided from which molded articles with a high impact resistance and a high heat resistance can be molded with improved moldability. Also provided is a heat-resistant polylactic acid-based resin molded article with an improved impact resistance, as well as a simple and highly efficient process for manufacturing such a heat-resistant molded article of polylactic acid-based resin.

## Claims

1. A polylactic acid-based resin composition comprising 0.01 to 5.0 parts by weight of a metal phosphate and 0.01 to 5.0 parts by weight of a hydrotalcite compound, each serving as nucleating agent, with respect to 100 parts by weight of a polylactic acid-based polymer.

2. A polylactic acid-based resin composition according to claim 1 having a crystallization peak temperature measured by a differential scanning calorimeter (DSC) within the range of 90 to 120 °C and a heat of crystallization of 20 J/g or more.

3. The polylactic acid-based resin composition according to claim 1 or 2, wherein said metal phosphate comprises at least one metal salt of an aromatic organic phosphate represented either by the following general formula (1): 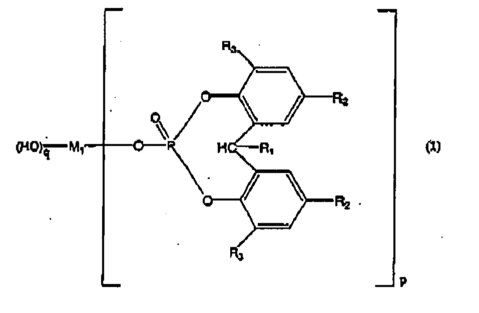 wherein R₁ represents a hydrogen atom or an alkyl group having 1 to 4 carbon atoms; R₂ and R₃ each independently represent a hydrogen atom or an alkyl group having 1 to 12 carbon atoms and may or may not be identical to each other; M₁ represents an alkali metal atom, an alkaline earth metal atom, a zinc atom, or an aluminum atom; p is an integer of 1 or 2; and q is an integer of 0 when M₁ is an alkali metal atom, an alkaline earth metal atom, or a zinc atom while q is an integer of 1 or 2 when M₁ is an aluminum atom, or by following the general formula (2): 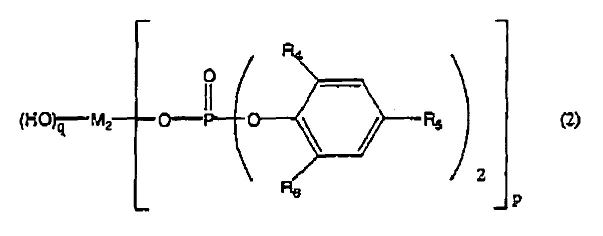 wherein R₄, R₅, and R₆ each independently represent a hydrogen atom or an alkyl group having 1 to 12 carbon atoms and may or may not be identical to each other; M₂ represents an alkali metal atom, an alkaline earth metal atom, a zinc atom, or an aluminum atom; p is an integer of 1 or 2; and q is an integer of 0 when M₂ is an alkali metal atom, an alkaline earth metal atom, or a zinc atom while q is an integer of 1 or 2 when M₂ is an aluminum atom.

4. The polylactic acid-based resin composition according to any of the preceding claims, further comprising as said nucleating agent at least one selected from the group consisting of a dibenzylidene sorbitol compound represented by the following general formula (3) and a metal salt of an aliphatic carboxylic acid: 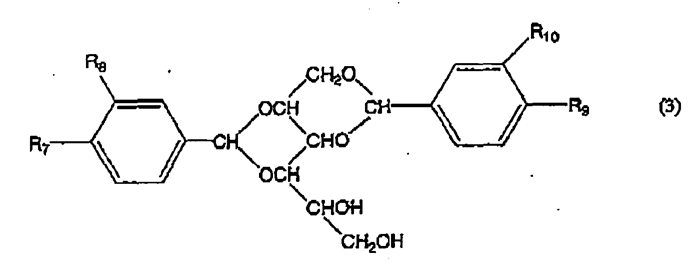 wherein R₇ and R₈ each independently represent a hydrogen atom or an alkyl group having 1 to 4 carbon atoms and may or may not be identical to each other, provided that at least one of R₇ and R₈ is an alkyl group having 1 to 4 carbon atoms; and R₉ and R₁₀ each independently represent a hydrogen atom or an alkyl group having 1 to 4 carbon atoms and may or may not be identical to each other, provided that at least one of R₉ and R₁₀ is an alkyl group having 1 to 4 carbon atoms.

5. The polylactic acid-based resin composition according to claim 1, 2, 3 or 4, wherein said hydrotalcite compound is represented by the following general formula (4):
LiₐZn_{b}Mg_{c}Al_{d}(OH)_{a+2b+3d-2}CO₃ • nH₂O (4)
wherein a is a number from 0 to 5.0; b is a number from 0 to 3.0; c is a number from 0.1 to 6.0; d is a number from 1.0 to 8.0; and n is a number from 0 to 30.

6. The polylactic acid-based resin composition according to claim 5, wherein said hydrotalcite compound is a lithium-containing hydrotalcite compound with the amount a in the general formula (4) being in the range from 0.1 to 5.

7. The polylactic acid-based resin composition according to any of the preceding claims, further comprising hydrous magnesium silicate (talc).

8. The polylactic resin composition according to claim 7, wherein said hydrous magnesium silicate (talc) has an average particle size of 10 µm or less.

9. The polylactic acid-based resin composition according to any of claims 2 to 8, wherein the polylactic acid-based polymer is a polymer (A) which is capable of forming a stereocomplex and is composed mainly of a polylactic acid comprising a poly-L-lactic acid composed mainly of L-lactic acid and a poly-D-lactic acid composed mainly of D-lactic acid, and 0.01 to 5.0 parts by weight of a metal phosphate as the nucleating agent for crystallization.

10. The polylactic acid-based resin composition according to claim 9, further comprising 0.1 parts by weight or more of the hydrous magnesium silicate (talc) per 100 parts by weight of the polymer (A).

11. The polylactic acid-based resin composition according to any of claims 9 and 10, wherein said poly-L-actic acid composed mainly of L-lactic acid comprises 70 to 100 mol% of L-lactic acid units and 0 to 30 mol% of D-lactic acid units and/or copolymer units other than lactic acid, and/or,
said poly-D-lactic acid composed mainly of D-lactic acid comprises 70 to 100 mol% of D-lactic acid units and 0 to 30 mol% of L-lactic acid units and/or copolymer units other than lactic acid.

12. The polylactic acid-based resin composition according to any of claims 9 to 11, wherein said poly-L-lactic acid composed mainly of L-lactic acid has a weight average molecular weight of 50,000 to 500,000, and/or, said poly-D-lactic acid composed mainly of D-lactic acid has a weight average molecular weight of 50,000 to 500,000

13. The polylactic acid-based resin composition according to any of claims 9 to 12, wherein the blend ration by weight of said poly-L-lactic acid to said poly-D-lactic acid is in the range of 10:90 to 90:10.

14. The polylactic acid-based resin composition according to any of claims 9 to 13, wherein said polymer (A) which is capable of forming a stereocomplex comprises an aliphatic polyester other than polylactic acid.

15. A heat-resistant article of polylactic acid-based resin obtained by molding the resin composition according to any of the preceding claims.

16. A method for producing a heat-resistant molded article of polylactic acid-based resin, involving the steps of:
melting the polylactic acid-based resin composition according to any of claims 1 to 14,
filling a mold of a molding machine set in a temperature range of not more than the crystallization-initiating point nor less than the glass transition point, as measured by a differential scanning calorimeter (DSC), with said composition, and
molding said composition under crystallizing.

17. The method for producing a heat-resistant molded article of polylactic acid-based resin according to claim 16, wherein the temperature of said mold is set in a temperature range of not more than the crystallization-initiating point nor less than the crystallization-terminating point, as measured by a differential scanning calorimeter (DSC).

## Patentansprüche

1. Harzzusammensetzung auf Basis von Polymilchsäure umfassend 0,01 bis 5,0 Gewichtsanteile eines Metallphosphats und 0,01 bis 5,0 Gewichtsanteile einer Hydrotalcitverbindung, welche jeweils als Nucleierungsmittel dienen, bezogen auf 100 Gewichtsanteilen eines Polymers auf Basis von Polymilchsäure.

2. Harzzusammensetzung auf Basis von Polymilchsäure nach Anspruch 1 mit einer mit Differential-Raster-Kalorimeter (DSC) gemessenen Peak-Temperatur der Kristallisierung in einem Bereich von 90 bis 120°C und einer Wärme der Kristallisierung von 20 J/g oder mehr.

3. Harzzusammensetzung auf Basis von Polymilchsäure nach Anspruch 1 oder 2, wobei das Metallphosphat wenigstens ein Metallsalz eines aromatischen organischen Phosphats umfasst, wiedergegeben entweder durch die folgende allgemeine Formel (1): 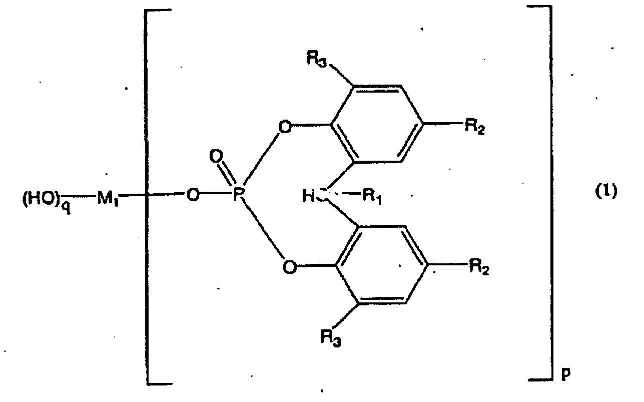 worin R₁ ein Wasserstoffatom wiedergibt oder eine Alkylgruppe mit 1 bis 4 Kohlenstoffatomen; R₂ und R₃ jeweils unabhängig ein Wasserstoffatom wiedergeben oder eine Alkylgruppe mit 1 bis 12 Kohlenstoffatomen und identisch sein können oder nicht; M₁ ein Alkalimetallatom, ein Erdalkalimetallatom, ein Zinkatom oder ein Aluminiumatom wiedergibt; p die ganze Zahl 1 oder 2 ist; und q die ganze Zahl 0 ist, wenn M₁ ein Alkalimetallatom, ein Erdalkalimetallatom oder ein Zinkatom ist, während q die ganze Zahl 1 oder 2 ist, wenn M₁ ein Aluminiumatom ist, oder wiedergegeben durch die folgende allgemeine Formel (2): 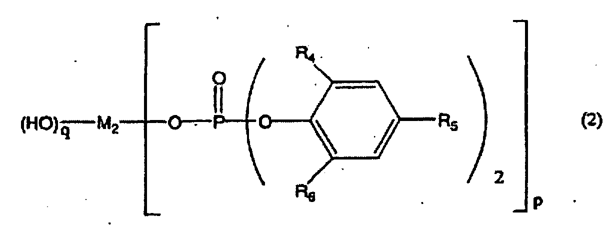 worin R₄, R₅ und R₆ jeweils unabhängig ein Wasserstoffatom wiedergeben oder eine Alkylgruppe mit 1 bis 12 Kohlenstoffatomen und identisch sein können oder nicht; M₂ ein Alkalimetallatom, ein Erdalkalimetallatom, ein Zinkatom oder ein Aluminiumatom wiedergibt; p die ganze Zahl 1 oder 2 ist; und q die ganze Zahl 0 ist, wenn M₂ ein Alkalimetallatom, ein Erdalkalimetallatom oder ein Zinkatom ist, während q die ganze Zahl 1 oder 2 ist, wenn M₂ ein Aluminiumatom ist.

4. Harzzusammensetzung auf Basis von Polymilchsäure nach einem der vorhergehenden Ansprüche, ferner als Nucleierungsmittel wenigstens eines umfassend, ausgewählt aus der Gruppe, bestehend aus einer Dibenzylidensorbitolverbindung, wiedergegeben durch die folgende allgemeine Formel (3) und einem Metallsalz einer aliphatischen Carbonsäure: 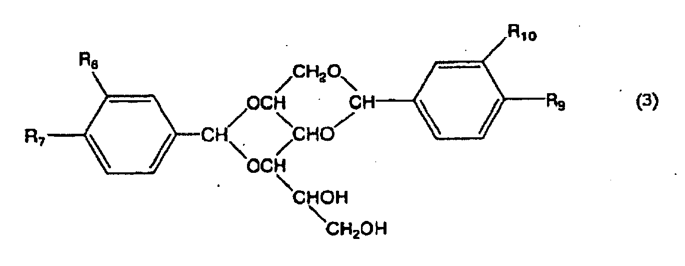 worin R₇ und R₈ jeweils unabhängig ein Wasserstoffatom wiedergeben oder eine Alkylgruppe mit 1 bis 4 Kohlenstoffatomen und identisch sein können oder nicht; vorausgesetzt, dass wenigstens einer, R₇ oder R₈ eine Alkylgruppe mit 1 bis 4 Kohlenstoffatomen ist; und R₉ und R₁₀ jeweils unabhängig ein Wasserstoffatom wiedergeben oder eine Alkylgruppe mit 1 bis 4 Kohlenstoffatomen und identisch sein können oder nicht; vorausgesetzt, dass wenigstens einer, R₉ oder R₁₀ eine Alkylgruppe mit 1 bis 4 Kohlenstoffatomen ist.

5. Harzzusammensetzung auf Basis von Polymilchsäure nach Anspruch 1, 2, 3 oder 4, wobei die Hydrotalcitverbindung durch die folgende allgemeine Formel (4) wiedergegeben wird:
**LiₐZn_{b}Mg_{c}Al₄((OH)_{a+2b+2c+3d-2}CO₃·nH₂O** (4)
worin a eine Zahl von 0 bis 5,0 ist; b eine Zahl von 0 bis 3,0 ist; c eine Zahl von 0,1 bis 6,0 ist; d eine Zahl von 1,0 bis 8,0 ist und n eine Zahl von 0 bis 30 ist.

6. Harzzusammensetzung auf Basis von Polymilchsäure nach Anspruch 5, wobei die Hydrotalcitverbindung eine Lithium-haltige Hydrotalcitverbindung ist mit einer Menge a in der allgemeinen Formel (4) in einem Bereich von 0,1 bis 5.

7. Harzzusammensetzung auf Basis von Polymilchsäure nach einem der vorhergehenden Ansprüche, ferner wässriges Magnesiumsilicat (talc.) umfassend.

8. Harzzusammensetzung auf Basis von Polymilchsäure nach Anspruch 7, wobei das wässrige Magnesiumsilicat (talc.) eine durchschnittliche Partikelgröße von 10 µm oder weniger aufweist.

9. Harzzusammensetzung auf Basis von Polymilchsäure nach einem der Ansprüche 2 bis 8, wobei das Polymer auf Basis von Polymilchsäure ein Polymer (A) ist, das geeignet ist einen Stereokomplex zu bilden und das hauptsächlich aus Polymilchsäure besteht, umfassend eine hauptsächlich aus L-Milchsäure bestehende Poly-L-Milchsäure und eine hauptsächlich aus D-Milchsäure bestehende Poly-D-Milchsäure und 0,01 bis 5,0 Gewichtsanteile eines Metallphosphats als Nucleierungsmittel für die Kristallisierung.

10. Harzzusammensetzung auf Basis von Polymilchsäure nach Anspruch 9, ferner 0,1 Gewichtsanteile oder mehr des wässrigen Magnesiumsilicats (talc.) auf 100 Gewichtsanteile des Polymers (A) umfassend.

11. Harzzusammensetzung auf Basis von Polymilchsäure nach einem der Ansprüche 9 und 10, wobei die aus hauptsächlich aus L-Milchsäure bestehende Poly-L-Milchsäure 70 bis 100 Mol-% L-Milchsäureeinheiten umfasst und 0 bis 30 Mol-% D-Milchsäureeinheiten und/oder andere Copolymereinheiten als Milchsäure, und/oder die hauptsächlich aus D-Milchsäure bestehende Poly-D-Milchsäure 70 bis 100 Mol-% D-Milchsäureeinheiten umfasst und 0 bis 30 Mol-% L-Milchsäureeinheiten und/oder andere Copolymereinheiten als Milchsäure.

12. Harzzusammensetzung auf Basis von Polymilchsäure nach einem der Ansprüche 9 bis 11, wobei die aus hauptsächlich aus L-Milchsäure bestehende Poly-L-Milchsäure ein gewichtsgemitteltes Molekulargewicht von 50000 bis 500000 aufweist und/oder die hauptsächlich aus D-Milchsäure bestehende Poly-D-Milchsäure ein gewichtsgemitteltes Molekulargewicht von 50000 bis 500000 aufweist.

13. Harzzusammensetzung auf Basis von Polymilchsäure nach einem der Ansprüche 9 bis 12, wobei das Mischungsverhältnis nach Gewicht der Poly-L-Milchsäure zu der Poly-D-Milchsäure in einem Bereich von 10:90 bis 90:10 liegt.

14. Harzzusammensetzung auf Basis von Polymilchsäure nach einem der Ansprüche 9 bis 13, wobei das Polymer (A), das geeignet ist einen Stereokomplex zu bilden, einen anderen aliphatischen Polyester als Milchsäure umfasst.

15. Wärmebeständiger Artikel aus einem Harz auf Basis von Polymilchsäure, erhältlich durch Formen der Harzzusammensetzung nach einem der vorhergehenden Ansprüche.

16. Verfahren zum Herstellen eines wärmebeständigen geformten Artikels aus einem Harz auf Basis von Polymilchsäure, umfassend die Schritte:
Schmelzen der Harzzusammensetzung auf Basis von Polymilchsäure nach einem der Ansprüche 1 bis 14,
Befüllen einer Form eines Formmaschinen-Geräts in einem Temperaturbereich von nicht mehr als dem Kristallisierungs-Anfangspunkt und auch nicht weniger als dem Glasübergangspunkt, wie mit Differential-Raster-Kalorimeter (DSC) gemessen, mit dieser Zusammensetzung, und
Formen der Zusammensetzung unter Kristallisieren.

17. Verfahren zum Herstellen eines wärmebeständigen geformten Artikels aus einem Harz auf Basis von Polymilchsäure nach Anspruch 16, wobei die Temperatur der Form in einem Temperaturbereich von nicht mehr als dem Kristallisierungs-Anfangspunkt und auch nicht weniger als dem Kristallisierungs-Endpunkt, wie mit Differential-Raster-Kalorimeter (DSC) gemessen, festgelegt wird.

## Revendications

1. Composition de résine à base d'acide polylactique comprenant 0,01 à 5,0 parties en poids d'un phosphate de métal et 0,01 à 5,0 parties en poids d'un composé hydrotalcite, chacun servant comme agent de nucléation, pour 100 parties en poids d'un polymère à base d'acide polylactique.

2. Composition de résine à base d'acide polylactique selon la revendication 1 ayant une température de pointe de cristallisation mesurée par un calorimètre à compensation de puissance (DSC) à l'intérieur de la plage de 90 à 120°C et une chaleur de cristallisation de 20 J/g ou plus.

3. Composition de résine à base d'acide polylactique selon la revendication 1 ou 2, dans laquelle ledit phosphate de métal comprend au moins un sel métallique d'un phosphate organique aromatique représenté soit par la formule générale (1) suivante : 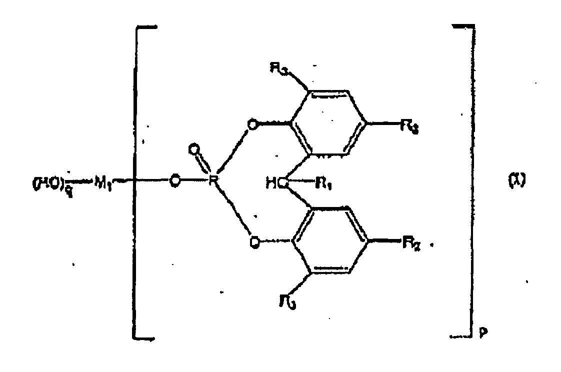 dans laquelle R₁ représente un atome d'hydrogène ou un groupe alkyle ayant 1 à 4 atomes de carbone ; R₂ et R₃ chacun indépendamment représentent un atome d'hydrogène ou un groupe alkyle ayant 1 à 12 atomes de carbone et peuvent être ou ne pas être identiques l'un à l'autre ; M₁ représente un atome de métal alcalin, un atome de métal alcalinoterreux, un atome de zinc, ou un atome d'aluminium ; p est un entier de 1 ou 2 ; et q est un entier de 0 lorsque M₁ est un atome de métal alcalin, un atome de métal alcalinoterreux, ou un atome de zinc tandis que q est un entier de 1 ou 2 lorsque M₁ est un atome d'aluminium, soit par la formule générale (2) suivante : 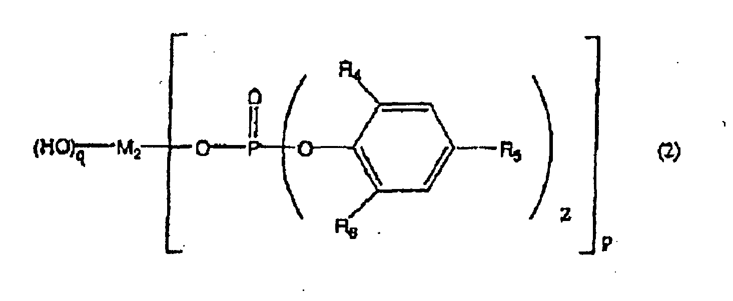 dans laquelle R₄, R₅, et R₆ chacun indépendamment représentent un atome d'hydrogène ou un groupe alkyle ayant 1 à 12 atomes de carbone et peuvent être ou ne pas être identiques l'un à l'autre ; M₂ représente un atome de métal alcalin, un atome de métal alcalinoterreux, un atome de zinc, ou un atome d'aluminium ; p est un entier de 1 ou 2 ; et q est un entier de 0 lorsque M₂ est un atome de métal alcalin, un atome de métal alcalinoterreux, ou un atome de zinc tandis que q est un entier de 1 ou 2 lorsque M₂ est un atome d'aluminium.

4. Composition de résine à base d'acide polylactique selon l'une quelconque des revendications précédentes, comprenant en outre comme dit agent de nucléation au moins un choisi parmi le groupe consistant en un composé de dibenzylidène sorbitol représenté par la formule générale (3) suivante et un sel métallique d'un acide carboxylique aliphatique : 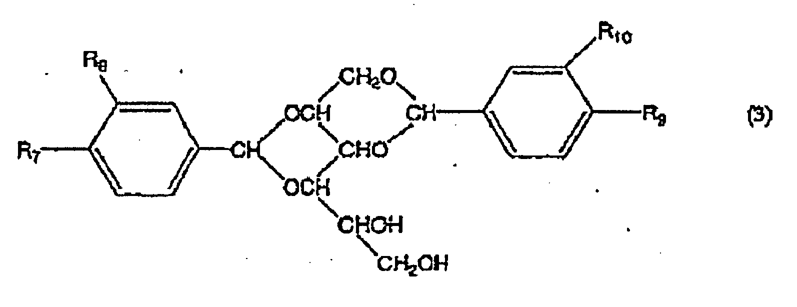 dans laquelle R₇ et R₈ chacun indépendamment représentent un atome d'hydrogène ou un groupe alkyle ayant 1 à 4 atomes de carbone et peuvent être ou ne pas être identiques l'un à l'autre, sous réserve qu'au moins un de R₇ et R₈ soit un groupe alkyle ayant 1 à 4 atomes de carbone ; et R₉ et R₁₀ chacun indépendamment représentent un atome d'hydrogène ou un groupe alkyle ayant 1 à 4 atomes de carbone et peuvent être ou ne pas être identiques l'un à l'autre, sous réserve qu'au moins un de R₉ et R₁₀ soit un groupe alkyle ayant 1 à 4 atomes de carbone.

5. Composition de résine à base d'acide polylactique selon la revendication 1, 2, 3 ou 4, dans laquelle ledit composé hydrotalcite est représenté par la formule générale (4) suivante :
LiₐZn_{b}Mg_{c}Al_{d}(OH)_{a+2b+3d-2}CO₃•nH₂O (4)
dans laquelle a est un nombre de 0 à 5,0 ; b est un nombre de 0 à 3,0 ; c est un nombre de 0,1 à 6,0 ; d est un nombre de 1,0 à 8,0 ; et n est un nombre de 0 à 30.

6. Composition de résine à base d'acide polylactique selon la revendication 5, dans laquelle ledit composé hydrotalcite est un composé hydrotalcite contenant du lithium avec la quantité a dans la formule générale (4) étant dans la plage de 0,1 à 5.

7. Composition de résine à base d'acide polylactique selon l'une quelconque des revendications précédentes, comprenant en outre du silicate de magnésium hydraté (talc).

8. Composition de résine à base d'acide polylactique selon la revendication 7, dans laquelle ledit silicate de magnésium hydraté (talc) a une taille moyenne de particules de 10 µm ou moins.

9. Composition de résine à base d'acide polylactique selon l'une quelconque des revendications 2 à 8, dans laquelle le polymère à base d'acide polylactique est un polymère (A) qui est apte à former un stéréocomplexe et est composé essentiellement d'un acide polylactique comprenant un acide poly-L-lactique composé essentiellement d'acide L-lactique et un acide poly-D-lactique composé essentiellement d'acide D-lactique, et 0,01 à 5,0 parties en poids d'un phosphate de métal comme l'agent de nucléation pour la cristallisation.

10. Composition de résine à base d'acide polylactique selon la revendication 9, comprenant en outre 0,1 partie en poids ou plus du silicate de magnésium hydraté (talc) pour 100 parties en poids du polymère (A).

11. Composition de résine à base d'acide polylactique selon l'une quelconque des revendications 9 et 10, dans laquelle ledit acide poly-L-lactique composé essentiellement d'acide L-lactique comprend 70 à 100% en moles d'unités acide L-lactique et 0 à 30% en moles d'unités acide D-lactique et/ou d'unités de copolymère autre que l'acide lactique, et/ou,
ledit acide poly-D-lactique composé essentiellement d'acide D-lactique comprend 70 à 100% en moles d'unités acide D-lactique et 0 à 30% en moles d'unités acide L-lactique et/ou d'unités de copolymère autre que l'acide lactique.

12. Composition de résine à base d'acide polylactique selon l'une quelconque des revendications 9 à 11, dans laquelle ledit acide poly-L-lactique composé essentiellement d'acide L-lactique a un poids moléculaire moyen en poids de 50 000 à 500 000, et/ou, ledit acide poly-D-lactique composé essentiellement d'acide D-lactique a un poids moléculaire moyen en poids de 50 000 à 500 000.

13. Composition de résine à base d'acide polylactique selon l'une quelconque des revendications 9 à 12, dans laquelle le rapport de mélange en poids dudit acide poly-L-lactique sur ledit acide poly-D-lactique est dans la plage de 10:90 à 90:10.

14. Composition de résine à base d'acide polylactique selon l'une quelconque des revendications 9 à 13, dans laquelle ledit polymère (A) qui est apte à former un stéréocomplexe comprend un polyester aliphatique autre que l'acide polylactique.

15. Article résistant à la chaleur d'une résine à base d'acide polylactique obtenu par moulage de la composition de résine selon l'une quelconque des revendications précédentes.

16. Procédé de production d'un article moulé résistant à la chaleur d'une résine à base d'acide polylactique, impliquant les étapes de :
fusion de la composition de résine à base d'acide polylactique selon l'une quelconque des revendications 1 à 14,
remplissage d'un moule d'une machine de moulage fixé dans une plage de température de pas plus du point d'initiation de la cristallisation, ni pas moins que le point de transition vitreuse, tels que mesurés par un calorimètre à compensation de puissance (DSC), avec ladite composition, et
moulage de ladite composition sous cristallisation.

17. Procédé de production d'un article moulé résistant à la chaleur d'une résine à base d'acide polylactique selon la revendication 16, dans lequel la température dudit moule est fixée dans une plage de température de pas plus du point d'initiation de la cristallisation, ni pas moins que le point de fin de la cristallisation, tels que mesurés par un calorimètre à compensation de puissance (DSC).
